# EUROPÄISCHE PATENTSCHRIFT

(11) **EP 3 127 218 B1**
(45) Veröffentlichungstag und Bekanntmachung des Hinweises auf die Patenterteilung: **12.07.2023**
(21) Anmeldenummer: 15717442.6
(22) Anmeldetag: 02.04.2015
(51) Int. Cl.: H02K 3/22

(54) **ELEKTRISCHER HOHLLEITER FÜR EINE ELEKTROMAGNETISCHE MASCHINE**
HOLLOW ELECTRICAL CONDUCTOR FOR AN ELECTRICAL MACHINE
CONDUCTEUR ÉLECTRIQUE CREUX POUR UNE MACHINE ÉLECTRIQUE

(30) Priorität: 04.04.2014 DE 102014104817; 07.05.2014 DE 102014006656; 20.10.2014 DE 102014015564
(43) Veröffentlichungstag der Anmeldung: 08.02.2017
(73) Patentinhaber: Dynamic E Flow GmbH, 87600 Kaufbeuren (DE)
(72) Erfinder: SCHWEINERT, Nikolaus, 87600 Kaufbeuren (DE)
(74) Vertreter: Keilitz, Wolfgang
(86) Internationale Anmeldenummer: PCT/EP2015/057400
(87) Internationale Veröffentlichungsnummer: WO 2015/150556

(56) Entgegenhaltungen:
- EP-A1- 0 035 606
- EP-A1- 0 175 083
- WO-A1-2004/017490
- CH-A- 438 471
- CH-A5- 568 673
- DE-B- 1 117 211
- DE-B- 1 247 458
- US-A- 1 128 194
- US-A- 3 014 139
- US-A- 3 497 737
- US-A- 4 133 559
- US-A- 4 199 700
- US-A- 4 806 807
- US-A1- 2006 108 107
- Z WEN ET AL: "Optimum Design of Hollow Conductor in Stator Winding for Large Evaporative Hydro-generator", 2006 5TH INTERNATIONAL POWER ELECTRONICS AND MOTION CONTROL CONFERENCE, Bd. 1, 1. Januar 2006 (2006-01-01), Seiten 1-4, XP55195325, DOI: 10.1109/IPEMC.2006.297068 ISBN: 978-1-42-440448-3
- "Copper Hollow Conductors", , 1. Januar 2012 (2012-01-01), XP55195327, Gefunden im Internet: URL:http://www.luvata.com/Documents/Specia l Products/Hollow Conductors/Copper Hollow Conductors_ENG.pdf [gefunden am 2015-06-11]
- Anonymous: "Zugfestigkeit - Wikipedia", , 30. März 2014 (2014-03-30), XP55196349, Gefunden im Internet: URL:https://de.wikipedia.org/w/index.php?t itle=Zugfestigkeit&oldid=129026058 [gefunden am 2015-06-17]
- Anonymous: "Copper wire and cable - Wikipedia, the free encyclopedia", , 29. März 2014 (2014-03-29), XP55196346, Gefunden im Internet: URL:https://en.wikipedia.org/w/index.php?t itle=Copper_wire_and_cable&oldid=601887455 [gefunden am 2015-06-17]

## Beschreibung

Die vorliegende Erfindung betrifft eine elektrische Maschine mit einer Wicklung, die einen elektrischen Hohlleiter in Gestalt eines rohrförmigen, einen hohlen Innenraum aufweisenden Körpers aufweist, wobei der Körper ein elektrisch leitfähiges Material umfasst, einen Außendurchmesser und einen Innendurchmesser aufweist und an einer äußeren Mantelfläche des Körpers mit mindestens einer elektrisch isolierenden Schicht beschichtet ist und wobei ein Verhältnis von Außendurchmesser zu Innendurchmesser in einem Bereich von 1,25:1 bis 4:1 ist.

Elektrische Hohlleiter im Sinne der vorliegenden Erfindung dienen zum elektrischen Leiten eines elektrischen Stromes und gleichzeitig zum hydraulischen oder pneumatischen Leiten eines Kühlmittels. Zu elektrischer Hohlleiter alternative Bezeichnungen sind elektrischer Hohldraht oder elektrisch leitender Hohldraht.

Gattungsgemäße elektrische Hohlleiter sind im Stand der Technik bekannt und werden bei großen und komplexen Systemen, wie beispielsweise supraleitenden Magneten, Teilchenbeschleunigern, Fusionsreaktoren und Grenzleistungsturbogeneratoren, eingesetzt. Regelmäßig sind die dort verbauten elektrischen Hohlleiter zu großen elektromagnetischen Spulen mit großen Biegeradien gewickelt, geformt oder aus einzelnen Wicklungsteilen zusammengesetzt. Hierbei ist es erforderlich, dass die einzelnen Windungen des elektrischen Hohlleiters gegeneinander elektrisch isoliert sind, um einen Kurzschluss der Spule zu verhindern. Nachteilig an einer elektrisch isolierenden Schicht ist, dass sie in der Regel auch sehr gut thermisch isoliert, was den Abtransport von Wärme behindert, die bei einem Fließen eines elektrischen Stromes entsteht. Je mehr Strom fließt, umso größer ist die entstehende Wärmemenge. Da jedoch das Leiten von großen Strömen oder, relativ betrachtet, das Erreichen von großen Stromdichten eines der wichtigsten Kriterien für einen effizienten Betrieb der oben genannten Systeme ist, ist eine effiziente Wärmeabfuhr essenziell. Um einen effizienten Abtransport der Wärme zu gewährleisten, wird ein Kühlmittel durch den elektrischen Hohlleiter gepumpt und somit die Wärme innenseitig abgeführt. Es wäre wünschenswert, diese optimale Art der Wärmeabfuhr auch bei kleinen und mittleren elektromagnetischen Maschinen des täglichen Lebens zur Verfügung zu haben. Kleine elektromagnetische Maschinen im Sinne der vorliegenden Erfindung werden typischerweise in Serie hergestellt und weisen eine Maximalleistung von weniger als 5 MW auf. Beispiele hierfür sind Elektromotoren für Haushaltsgeräte, Handwerkzeuge, Baumaschinen, Traktoren, Werkzeugmaschinen, Elektromotoren für Land-, Wasser- und Luftfahrzeuge und Generatoren für Windkraftanlagen. Allerdings weisen kleine und mittlere elektromagnetische Maschinen kleine Dimensionen auf. Insbesondere sind die elektromagnetischen Spulen klein zu bemessen, sodass beim bevorzugt automatisierten Wickeln der Spulen kleine Biegeradien realisiert werden müssen. Die von den großen Systemen bekannten elektrischen Hohlleiter sind hierfür ungeeignet. Bei kleinen und mittleren Systemen werden zumeist indirekte Kühlverfahren, wie beispielsweise Wassermantelkühlung oder Ölnebelkühlung, eingesetzt.

Elektrische Turbogeneratoren mit einer innengekühlten Hohlleiterwicklung sind beispielsweise aus der US 3 014 139 A, der US 3 497 737 A oder der CH 438 471 A bekannt. In Bezug auf Hohlleiter-Designs wird auf die Druckschriften von Z WEN ET AL: "Optimum Design of Hollow Conduotor in Stator Winding for Large Evaporative Hydrogenerator", 2006 5TH INTERNATIONAL POWER ELECTRONICS AND MOTION CONTROL CONFERENCE, Bd. 1, 1. Januar 2006 (2006-01-01), Seiten 1-4, XP55195325, DOI: 10.1109/IPEIVIC.2006.297068, ISBN: 978-1 -42-440448-3 und "Copper Hollow Conductors", 1. Januar 2012 (2012-01 -01), XP55195327 verwiesen.

Es ist daher Aufgabe der vorliegenden Erfindung, eine elektrische Maschine mit einem Hohlleiter der eingangs genannten Art anzugeben, der bei kleinen und mittleren elektromagnetischen Maschinen einsetzbar ist.

Zur Lösung dieser Aufgabe schlägt die vorliegende Erfindung eine elektrische Maschine mit einem Hohlleiter der eingangs genannten Art vor, wobei ein Verhältnis von Außendurchmesser zu Innendurchmesser des elektrischen Hohlleiters in einem Bereich von 1,25:1 bis 4:1 und der Außendurchmesser in einem Bereich von 1,0 mm bis 3,2 mm liegt. Mit dem vorgeschlagenen Außendurchmesser und Verhältnis von Außendurchmesser zu Innendurchmesser stellt der elektrische Hohlleiter einen optimalen Kompromiss dar zwischen kleiner Dimensionierung, hoher Leitfähigkeit und ausreichender Verarbeitbarkeit ohne eine nachteilige Verengung des Innenraumes an Biegestellen. Die erforderlichen kleinen Biegeradien lassen sich formen, ohne dass eine schädliche Veränderung einer Querschnittsform des Körpers beim Wickeln über Kanten mit kleinen Radien eintritt, insbesondere ohne dass der elektrische Hohlleiter einreißt, abreißt oder knickt. Auf Grund seines Außendurchmessers ist der elektrische Hohlleiter ähnlich dünn dimensioniert wie Drähte, die ansonsten regelmäßig verwendet werden, um entsprechende Spulen zu wickeln. Drähte im Sinne der vorliegenden Erfindung sind Volldrähte ohne hohlen Innenraum. Insofern kann prinzipiell jede elektromagnetische Maschine mit einer Leistung größer etwa 1 kW, die konventionell Drahtspulen aufweist, ohne Kompatibilitätsprobleme mit Hohlleiterspulen ausgerüstet oder nachgerüstet werden. Das vorgeschlagene Verhältnis von Außendurchmesser zu Innendurchmesser ist optimal für das Erreichen und Halten eines relativ großen elektrischen Stromes in dem elektrischen Hohlleiter über eine lange Zeit hinweg, mit anderen Worten für einen Dauerbetrieb der elektromagnetischen Maschine. Bei der Optimierung des elektrischen Hohlleiters wurden die folgenden Parameter berücksichtigt: Querschnittsfläche des Körpers, um ausreichend Fläche zum Leiten des elektrischen Stromes bereitzustellen; Querschnittsfläche des hohlen Innenraumes, um ausreichend Fläche zum Leiten des Kühlmittels bereitzustellen; Geometrie der Querschnittsflächen, um ausreichend Kontaktlänge zum Übertragen der Wärme von dem Körper auf das Kühlmittel zu ermöglichen; Geometrie der Querschnittsflächen, um einen Fluss des Kühlmittels nicht zu behindern; Geometrie der Querschnittsfläche des Körpers, um einen hinreichend biegsamen elektrischen Hohlleiter zu erhalten; Geometrie der Querschnittsfläche des Körpers, um einen hinreichend zugfesten elektrischen Hohlleiter zu erhalten; und Geometrie der Querschnittsfläche des Körpers, um einen hinreichend knickfesten elektrischen Hohlleiter zu erhalten, der bei Biegung nicht zu einer Verengung des Innenraumes neigt. Weitere Parameter waren das Material des Körpers und damit verbunden seine elektrische Leitfähigkeit, Wärmeleitfähigkeit, die elastischen Moduln, die Art und die Dicke der elektrisch isolierenden Schicht, die Art (Viskosität, Wärmeleitfähigkeit, Wärmekapazität und Wärmeübertragungskoeffizient) und die Flussrate des Kühlmittels, das Wicklungsmuster der Spule und die Stärke und die Frequenz des elektrischen Stromes. In Simulation und Experiment zeigte sich, dass der erfindungsgemäß dimensionierte elektrische Hohlleiter optimal geeignet ist zum Wickeln von Spulen, die in kleinen und mittleren elektromagnetischen Maschinen verbaut sind, wobei eine Leistungsdichte einer mit einem elektrischen Hohlleiter ausgerüsteten elektromagnetischen Maschine deutlich erhöht ist gegenüber einer mit einem Draht ausgestatteten elektromagnetischen Maschine. Besonders bevorzugt beträgt der Außendurchmesser des Körpers des elektrischen Hohlleiters zwischen 2,0 mm und 3,0 mm, beispielsweise 2,5 mm, und unabhängig davon das Verhältnis von Außendurchmesser zu Innendurchmesser 1,5:1 oder 2:1. Bei diesen Werten sind die vorstehend beschriebenen Vorteile am meisten ausgeprägt. Ist ausreichend Wickelraum vorhanden, so sind größere Außendurchmesser zu bevorzugen, insbesondere wenn manuell gewickelte Kleinserien von kleinen und mittleren elektromagnetischen Maschinen herzustellen sind.

Des Weiteren kann der rohrförmige Körper des elektrischen Hohlleiters als ein rundes Rohr, ein ovales Rohr, ein quadratisches Rohr, ein rechteckiges Rohr oder eine Kombination davon ausgebildet sein. Eine mögliche Kombination wäre beispielsweise ein außen quadratisches und innen rundes Rohr. Zur Beschreibung und Beanspruchung der vorliegenden Erfindung werden die allgemein verständlichen Begriffe Außendurchmesser und Innendurchmesser für ein Außenmaß und ein Innenmaß des rohrförmigen Körpers verwendet, da der rohrförmige Körper bevorzugt rundrohrförmig ausgebildet ist. Für eckige Rohrquerschnitte entspricht ein diagonales Außenmaß dem Außendurchmesser und ein diagonales Innenmaß dem Innendurchmesser. Bevorzugt ist der rohrförmige Körper als ein rundrohrförmiger Körper ausgebildet, wobei das Rundrohr außen und innen rund ist. Durch die kreisrunde Außenform des rohrförmigen Körpers ist der elektrische Hohlleiter äußerlich identisch zu einem massiven Drahtleiter oder Volldrahtleiter, sodass der elektrische Hohlleiter im Wesentlichen gleich wie ein Drahtleiter handhabbar und verwendbar ist. Beispielsweise ist der Vorgang eines manuellen oder automatisierten Wickelns oder Wendens einer Spule identisch und die mit einem elektrischen Hohlleiter gewickelte Spule ist qualitativ gleich gut gewickelt wie eine mit einem Drahtleiter gewickelte Spule. Bei anderen Außenformen, insbesondere bei eckigen Außenformen, gestaltet sich der Vorgang des Wickelns, insbesondere des automatisierten Wickelns, deutlich schwieriger und führt deshalb regelmäßig zu qualitativ schlechter gewickelten Spulen oder ist auf Grund der Außenform prozesstechnisch nicht umsetzbar. Ursächlich ist die geänderte Geometrie bei Torsion des beispielsweise rechteckigen elektrischen Hohlleiters oder Drahtleiters und damit die mangelhafte Passgenauigkeit bei einer Aneinanderreihung von zwei oder mehr Windungen der Spule zu einer kompakten Wicklung mit einer großen Windungsdichte. Um bei sehr engen Biegeradien ein Knicken des elektrischen Hohlleiters zu verhindern, kann es vorteilhaft sein, dass der Wickelkörper, zum Beispiel ein Anker, auf den die Spule gewickelt wird, rinnenartige Vertiefungen zum Aufnehmen einer ersten Lage der Wicklung der Spule aufweist. Durch die rinnenartigen Vertiefungen ist der elektrische Hohlleiter seitlich geführt. Diese Seitenführung verhindert eine Verbreiterung des elektrischen Hohlleiters, die regelmäßig an potenziellen Knickstellen auftritt. Für jede weitere Lage bildet die jeweils darunterliegende Lage eine Seitenführung, wenn die Lagen ineinander einsinkend gewickelt werden. Weiterhin besteht die Möglichkeit, Statorbleche und Rotorbleche so zu formen, dass bei einer Aneinanderreihung der Statorbleche beziehungsweise Rotorbleche bevorzugte Radien für die elektrischen Hohlleiter bereitgestellt werden.

In einer vorteilhaften Ausgestaltung der vorliegenden Erfindung ist das Material Kupfer, Aluminium oder eine Legierung eines der genannten Materialien. Das Material ist bevorzugt Kupfer, denn Kupfer bietet eine hohe elektrische Leitfähigkeit und eine hohe thermische Leitfähigkeit zum Leiten von großen elektrischen Strömen beziehungsweise zum effizienten Übertragen der Wärme an das Kühlmittel. Weiterhin ist Kupfer ausreichend elastisch und zugfest, um elektrische Hohlleiter mit den vorgeschlagenen Abmessungen herstellen und zu Spulen wickeln zu können. Darüber hinaus zeigen elektrische Hohlleiter aus Kupfer nach dem Ziehen der elektrischen Hohlleiter eine mikroskopisch hinreichend glatte Oberflächenstruktur, die eine Wirbelbildung in dem Kühlmittel vermeidet und einem laminaren Fluss des Kühlmittels zuträglich ist. Typischerweise ist das Material nicht reines Kupfer, sondern eine Kupferlegierung, die etwa 99,5% Kupfer und etwa 0,5% Magnesium aufweist. Eine solche Kupferlegierung wird auch bei Drähten verwendet und ist deshalb in großen Mengen und zu moderaten Kosten kommerziell erhältlich. Alternativ kann das Material ein anderes leitfähiges Metall, wie zum Beispiel Silber, Gold oder Platin, oder ein leitfähiger Kunststoff oder Verbundwerkstoff sein.

Der elektrische Hohlleiter verfügt vorzugsweise über eine Zugfestigkeit in einem Bereich von 75 N/mm² bis 225 N/mm². Die Zugfestigkeit des elektrischen Hohlleiters basiert neben der Geometrie des Körpers und dem Material auf der Art und Weise, wie das Material während der Herstellung des Körpers verarbeitet worden ist. Die Zugfestigkeit ist einer der entscheidenden Parameter für das automatisierte Wickeln. Ist die Zugfähigkeit zu klein, reißt der elektrische Hohlleiter beim manuellen oder automatisierten Wickeln. Ist die Zugfähigkeit zu groß, ist der elektrische Hohlleiter zu steif und knickt beim Wickeln. Besonders bevorzugt ist die Zugfestigkeit des elektrischen Hohlleiters in einem Bereich von 100 N/mm² bis 200 N/mm², beispielsweise gleich 150 N/mm². Alle angegebenen Zugfestigkeiten gelten insbesondere bei 1 % Dehnung des elektrischen Hohlleiters.

In einer weiteren Ausgestaltung ist die Schicht eine Lackschicht oder eine Bandage. Lackschichten lassen sich auf elektrische Hohlleiter gleichmäßig dünn auftragen und sind daher für sehr dünne elektrische Hohlleiter besonders geeignet. Zusätzlich zu einer ersten Schicht kann der elektrische Hohlleiter von weiteren Schichten ummantelt sein. Zwei oder mehr Schichten bewirken eine verbesserte Isolierung und damit eine erhöhte Spannungsfestigkeit des elektrischen Hohlleiters, beispielsweise bis zu 10 kV. Die Beschichtung der elektrischen Hohlleiter mit Lack erfolgt mittels einer Drahtlackiermaschine in einem Endlos-Lackierverfahren, wie es für die Herstellung von Kupferlackdrähten allgemein bekannt ist. Ein Bandagieren der elektrischen Hohlleiter ist eine alternative Art der Beschichtung. Die Schicht kann kunststoffbasiert sein. Alle anderen möglichen Verfahren zum Aufbringen einer isolierenden Schicht auf einen Drahtleiter können analog zum Aufbringen der isolierenden Schicht auf den elektrischen Hohlleiter eingesetzt werden.

Eine Elastizität und Plastizität des elektrischen Hohlleiters wird über die zuvor diskutierten Parameter derart eingestellt, dass der elektrische Hohlleiter über enge Radien mit möglichst parallelem Verlauf zu einer Oberfläche eines Wickelkörpers gewickelt werden kann, ohne dass der elektrische Hohlleiter Schaden nimmt. Ebenso muss die Elastizität und Plastizität der isolierenden Schicht adäquat gewählt sein, um eine Beschädigung der isolierenden Schicht beim Wickeln zu vermeiden.

Die Verwendung von groß dimensionierten elektrischen Hohlleitern zum Wickeln von großen elektromagnetischen Spulen für die zuvor beschriebenen großen Systeme ist im Stand der Technik bekannt. Jedoch lassen sich die groß dimensionierten elektrischen Hohlleiter gar nicht oder nicht eng genug biegen, um kleine Spulen für kleine elektromagnetische Maschinen zu wickeln. Weiterhin im Stand der Technik bekannt ist die Verwendung von klein dimensionierten Hohlleitern bei Kühlkreisläufen und Thermostaten, wo sie als rein hydraulischer Leiter beziehungsweise als Sensor wirken und ein Wickeln zu Spulen nicht erforderlich ist.

Zum Bereitstellen einer erforderlichen Biegsamkeit von elektrischen Hohlleitern zum Wickeln von elektromagnetischen Spulen kann der elektrische Hohlleiter zum kontinuierlichen Wickeln von mindestens einer vollständigen Windung einer elektromagnetischen Spule verwendet werden. Die vorstehend diskutierten Vorteile prädestinieren den elektrischen Hohlleiter zum Wickeln von kleinen Spulen für kleine elektromagnetische Maschinen. Nur auf Grund der Biegeeigenschaften des erfindungsgemäßen elektrischen Hohlleiters ist es möglich, eine kleine Spule mit einer oder mehreren vollständigen Windungen zu wickeln. Fortlaufende Windungen einer Spule sind jedoch essenziell, um den Durchfluss des Kühlmittels durch den elektrischen Hohlleiter nicht zu behindern. Die Anzahl der fortlaufenden Windungen liegt in einem Bereich von eins bis 10000 oder mehr und beträgt zum Beispiel zwei, fünf, zehn, 20, 50, 100, 150, 200, 250, 500, 750, 1000, 2000 oder 5000.

In einer weiterführenden Ausgestaltung ist die elektromagnetische Spule eine elektromagnetische Spule einer elektromagnetischen Maschine mit einer Maximalleistung von weniger als 5 MW. Elektromagnetische Maschinen mit weniger als 5 MW Maximalleistung gelten als kleine oder mittlere elektromagnetische Maschinen im Sinne der vorliegenden Erfindung. Besonders vorteilhaft ist die Verwendung des erfindungsgemäßen elektrischen Hohlleiters zum kontinuierlichen Wickeln von mindestens einer vollständigen Windung einer elektromagnetischen Spule einer elektromagnetischen Maschine mit einer Maximalleistung von weniger als 1 MW, beispielsweise 500 kW, 200 kW, 100 kW, 50 kW, 20 kW, 10 kW oder 5 kW. Selbst bei sehr kleinen elektromagnetischen Spulen wirkt sich die Verwendung des erfindungsgemäßen elektrischen Hohlleiters positiv aus, insbesondere wenn große Stromdichten generiert werden. Beispiele für kleine elektromagnetische Maschinen, deren Spulen mit dem erfindungsgemäßen elektrischen Hohlleiter ausgestattet oder ausstattbar sind, umfassen Generatoren für Kleinkraftwerke, Generatoren für Windkraftanlagen, Elektromotoren für Kraftfahrzeuge, insbesondere für Personenkraftfahrzeuge, Elektromotoren für Lokomotiven, Elektromotoren für Flugzeuge, Elektromotoren für Werkzeugmaschinen, Elektromotoren für Förderanlagen, Elektromotoren für elektrische Haushaltsgeräte, Elektromotoren für Computer, insbesondere zum Antreiben eines Lüfters, Transformatoren, Frequenzumrichter, Induktionsmaschinen, Übertrager, Linearmotoren, Relais, Schütze, Magnetresonanztomographen mit einer magnetischen Flussdichte von bis zu 10 T, kleinere Teilchenbeschleuniger, Induktionsöfen, Plasmaapplikationen und alle anderen möglichen Anwendungen.

Verbindungsstücke zum rein hydraulischen oder pneumatischen Verbinden von Rohrleitungen sind allgemein bekannt. In solchen Rohrleitungen zirkuliert zum Beispiel ein Kühlmittel. Derartige Verbindungsstücke sind auf Grund ihrer relativ großen Dimensionierung jedoch nicht geeignet, um einen erfindungsgemäßen elektrischen Hohlleiter funktionsfähig aufzunehmen, da dieser eine relativ kleine Dimensionierung aufweist. Weiterhin erhöht sich bei kleinen Innendurchmessern oder großen Leitungslängen der Rohrleitungen ein Strömungswiderstand für das Kühlmittel deutlich. Dies trifft insbesondere auf die filigranen elektrischen Hohlleiter zu. Bei großen elektromagnetischen Systemen mit groß dimensionierten elektrischen Hohlleitern herrscht in einem Kühlkreislauf hingegen ein relativ geringer Druck, weshalb dort beispielsweise Kühlmittelleitungen aus Polytetrafluorethylen (PTFE, Teflon^{®}) einsetzbar sind. Weiterhin ist zu beachten, dass die erfindungsgemäßen elektrischen Hohlleiter nicht nur zum hydraulischen oder pneumatischen Leiten des Kühlmittels, sondern auch zum elektrischen Leiten von elektrischen Strömen verwendet werden. Je nach Ausführung einer Spule oder Spulenanordnung einer elektromagnetischen Maschine ist es erforderlich, die mit dem erfindungsgemäßen elektrischen Hohlleiter gewickelte Spule in zwei oder mehrere Spulenteile aufzuteilen, wobei die einzelnen Spulenteile miteinander und mit einer Kühlmittelleitung zu verbinden sind. Die Verbindung der Spulenteile oder allgemein von zwei elektrischen Hohlleitern untereinander muss gegebenenfalls elektrisch leitend sein.

Weiterhin muss die Verbindung der Spulenteile oder allgemein von zwei elektrischen Hohlleitern und der Kühlmittelleitung hydraulisch oder pneumatisch leitend sein. Allerdings darf die Verbindung der Spulenteile oder allgemein von zwei elektrischen Hohlleitern und der Kühlmittelleitung in der Regel nicht elektrisch leitend sein, da ansonsten beispielsweise unterschiedliche Phasen kurzgeschlossen würden. Das in den elektrischen Hohlleitern und der Kühlmittelleitung zirkulierende Kühlmittel besteht aus einem elektrisch isolierenden Fluid, wobei das Fluid eine Flüssigkeit oder ein Gas sein kann. Auch sind Phasenübergänge des Fluides innerhalb eines Kühlkreislaufes denkbar.

Die erfindungsgemäße elektrische Maschine kann ein Verbindungsstück der eingangs genannten Art umfassen, wobei die Hohlleiteröffnung einen Durchmesser aufweist, der an einen Außendurchmesser eines Körpers des aufzunehmenden elektrischen Hohlleiters angepasst ist. Insbesondere ist der Durchmesser der Hohlleiteröffnung geringfügig kleiner, gleich oder geringfügig größer als der Außendurchmesser des Körpers des elektrischen Hohlleiters, der in die Hohlleiteröffnung aufzunehmen ist. Eine passgenaue oder annähernd passgenaue Abstimmung der Dimensionierung der Hohlleiteröffnung auf den aufzunehmenden elektrischen Hohlleiter erlaubt mit großem Vorteil die Herstellung einer fluiddichten und dauerhaften Verbindung zwischen dem Gehäuse des Verbindungsstückes und dem elektrischen Hohlleiter. Der Durchmesser der Hohlleiteröffnung liegt in einem Bereich von 1,0 mm bis 3,2 mm. In Analogie dazu gilt, dass eine passgenaue oder annähernd passgenaue Abstimmung der Dimensionierung der Kühlmittelleitungsöffnung auf die aufzunehmende Kühlmittelleitung mit großem Vorteil die Herstellung einer fluiddichten und dauerhaften Verbindung zwischen dem Gehäuse des Verbindungsstückes und der Kühlmittelleitung erlaubt. Insgesamt ist der elektrische Hohlleiter mit der Kühlmittelleitung funktional, insbesondere fluiddicht, verbunden. Das erfindungsgemäße Verbindungsstück ist bevorzugt als ein Anfangsstück oder ein Endstück ausgebildet, das den elektrischen Hohlleiter mit der Kühlmittelleitung verbindet, bevor beziehungsweise nachdem der elektrische Hohlleiter eine elektromagnetische Spule bildet.

Der elektrische Hohlleiter kann mit dem Gehäuse mittels folgender Verbindungstechniken verbunden sein: Weichlöten, Hartlöten, Ultraschallschweißen, Einpressen, Einschrauben in Innengewinde, Einschrauben mit Pressring, Verschrauben mit Mutter, Nieten, Kleben, Eingießen, Einschmelzen mit Glas, Sintern oder Vulkanisieren. Eine Schraubverbindung ist zerstörungsfrei lösbar und ermöglicht einen Austausch des elektrischen Hohlleiters. Weiterhin kann eine Schraubverbindung mit einer Klebeverbindung oder einer Lackverbindung kombiniert werden, um die Verbindung langanhaltend vibrationsresistent und fluiddicht zu machen.

In einer bevorzugten Ausgestaltung stellt das Gehäuse einen Tiefenanschlag zum Begrenzen einer Eintauchtiefe des elektrischen Hohlleiters in das Gehäuse bereit. Insbesondere ist der Tiefenanschlag durch eine Durchmesserverengung der Hohlleiteröffnung gebildet.

In einer vorteilhaften Ausgestaltung ist vorgesehen, dass das Verbindungsstück einen Gehäuseeinsatz aufweist, wobei der Gehäuseeinsatz das Gehäuse durchsetzend ausgebildet ist und ein hohles Inneres des Gehäuseeinsatzes die Hohlleiteröffnung bereitstellend ist. Mit großem Vorteil stellt der Gehäuseeinsatz eine variable Schnittstelle zwischen dem Gehäuse und dem elektrischen Hohlleiter bereit, die eine fluiddichte Anbindung des elektrischen Hohlleiters an das Gehäuse erlaubt. Das Gehäuse kann aus einem elektrisch leitenden Material oder einem elektrisch isolierenden Material bestehen. Der Gehäuseeinsatz kann aus einem elektrisch leitenden Material oder einem elektrisch isolierenden Material bestehen, wobei der Gehäuseeinsatz in letzterem Fall als ein elektrisch isolierendes Trennelement zwischen dem elektrischen Hohlleiter und der Kühlmittelleitung dient.

Der Gehäuseeinsatz kann mit dem Gehäuse mittels folgender Verbindungstechniken verbunden sein: Weichlöten, Hartlöten, Ultraschallschweißen, Einpressen, Einschrauben in Innengewinde, Einschrauben mit Pressring, Verschrauben mit Mutter, Nieten, Kleben, Eingießen, Einschmelzen mit Glas, Sintern oder Vulkanisieren. Eine Schraubverbindung ist zerstörungsfrei lösbar und ermöglicht einen Austausch des elektrischen Hohlleiters. Weiterhin kann eine Schraubverbindung mit einer Klebeverbindung oder einer Lackverbindung kombiniert werden, um die Verbindung langanhaltend vibrationsresistent und fluiddicht zu machen. Optional können Dichtungsscheiben verwendet werden. Dieselben Verbindungstechniken können verwendet werden, um den elektrischen Hohlleiter mit dem Gehäuseeinsatz zu verbinden.

Des Weiteren kann der Gehäuseeinsatz aus den folgenden Materialen bestehen: Messing, Eisen, Kupfer, Silber, Gold, Aluminium oder einer Legierung eines der genannten Materialien.

In einer vorteilhaften Ausgestaltung ist vorgesehen, dass der Gehäuseeinsatz einen Tiefenanschlag zum Begrenzen einer Eintauchtiefe des elektrischen Hohlleiters in das Gehäuse bereitstellend ist. Der Tiefenanschlag ist bevorzugt gebildet durch eine Durchmesserverengung des hohlen Inneren des Gehäuseeinsatzes.

Weiterhin ist erfindungsgemäß vorgesehen, dass der Innenraum abgerundet ausgebildet sein kann. Rundungen vermeiden Ecken und Kanten, an denen ansonsten Kerbspannung auftreten, und verbessern daher die Druckfestigkeit des Verbindungsstückes.

In einer besonders vorteilhaften Ausgestaltung ist das Verbindungsstück zum Verbinden von mindestens zwei erfindungsgemäßen elektrischen Hohlleitern und einer Kühlmittelleitung ausgebildet ist, wobei das Verbindungsstück mindestens zwei Hohlleiteröffnungen in dem Gehäuse zum Aufnehmen von offenen Enden der elektrischen Hohlleiter umfasst, wobei der Innenraum die Hohlleiteröffnungen und die Kühlmittelleitungsöffnung hydraulisch oder pneumatisch verbindend ausgebildet ist, wobei das Verbindungsstück ein elektrisch leitendes Kontaktelement und ein elektrisch isolierendes Trennelement aufweist, wobei das Kontaktelement mindestens zwei Hohlleiteröffnungen elektrisch verbindend ausgebildet ist und wobei das Trennelement zwischen einerseits dem Kontaktelement und den Hohlleiteröffnungen und andererseits der Kühlmittelleitungsöffnung elektrisch isolierend angeordnet ist. Unter der Voraussetzung, dass das in den elektrischen Hohlleitern und der Kühlmittelleitung zirkulierende Kühlmittel ein elektrisch isolierendes Fluid ist, bewirken das Kontaktelement und das Trennelement mit großem Vorteil eine elektrische Kopplung der elektrischen Hohlleiter, eine hydraulische oder pneumatische Kopplung der elektrischen Hohlleiter und der Kühlmittelleitung und eine elektrische Entkopplung der elektrischen Hohlleiter einerseits und der Kühlmittelleitung andererseits. Somit ist ein durchgängiger Stromfluss von elektrischem Hohlleiter zu elektrischem Hohlleiter möglich, ohne dass die Kühlmittelleitung involviert ist und den Stromkreislauf negativ beeinflusst. Dies ist erfindungswesentlich, denn auf Grund von erforderlichen Nenndrücken in der Kühlmittelleitung von bis zu 200 bar ist die Kühlmittelleitung regelmäßig metallisch ausgeführt und somit ebenfalls elektrisch leitend wie die elektrischen Hohlleiter. Ohne das erfindungsgemäße Trennelement wären die Kühlmittelleitung und gegebenenfalls daran anschließend eine Kühlmittelpumpe in den Stromkreislauf der elektrischen Hohlleiter miteinbezogen und bedürften einer elektrischen Isolierung gegenüber der Umgebung. Das erfindungsgemäße Verbindungsstück ist temperaturbeständig in einem Bereich von -35°C bis 200°C, durchschlagfest, für einen Langzeitbetrieb hinreichend widerstandsfähig und druckbeständig bis zu einem Berstdruck von 1000 bar. Der Nenndruck für den Langzeitbetrieb liegt zwischen 80 bar und 200 bar, bevorzugt bei etwa 120 bar.

In einer sehr vorteilhaften Ausgestaltung ist das Kontaktelement das Gehäuse und das Trennelement ist als eine das Gehäuse durchsetzende elektrisch isolierende Hülse ausgebildet, wobei ein hohles Inneres der elektrisch isolierenden Hülse die Kühlmittelleitungsöffnung bereitstellend ist. Ein elektrisch leitendes Gehäuse, beispielsweise aus Kupfer, Messing oder Stahl, erfüllt mit großem Vorteil mehrere Funktionen. Erstens dient das Gehäuse zur Bereitstellung eines hohlen Innenraumes zum Leiten des Kühlmittels zwischen den elektrischen Hohlleitern und der Kühlmittelleitung. Zweitens dient das Gehäuse als elektrisches Bindeglied zwischen den elektrischen Hohlleitern. Drittens kann das Gehäuse als elektrisches und hydraulisches oder elektrisches und pneumatisches Sammelglied für eine Vielzahl an elektrischen Hohlleitern und eine Kühlmittelleitung fungieren. Viertens kann das Gehäuse als elektrische Schnittstelle zwischen einer hohlleiterbasierten Spule und einer konventionellen elektrischen Drahtleitung zum Einspeisen oder Abführen eines elektrischen Stromes fungieren. Hierzu kann das Gehäuse eine Kontaktöse, einen Kontaktstift oder eine Kontaktklemme umfassen. Die elektrisch isolierende Hülse ist bevorzugt eine Keramikhülse. Ein keramisches Bauteil, insbesondere die Keramikhülse, ist als Trennelement bestens geeignet, da keramische Materialien hinreichend durchschlagsicher, in einem weiten Bereich temperaturbeständig und ausreichend druckstabil sind. Zum Beispiel kann die Keramikhülse innen und außen metallisiert sein, insbesondere mittels einer Stahlschicht. Dadurch ist die metallisierte Keramikhülse lötbar und schweißbar.

Typischerweise weist die Keramikhülse eine Wandstärke von etwa 0,5 mm auf. Alternativ zu Keramik kann das Trennelement ein elektrisch isolierendes Bauteil aus Kunststoff, Glas, Gummi oder Silikon umfassen. Insbesondere kann anstatt einer Keramikhülse eine Kunststoffhülse, eine Glashülse, eine Gummihülse oder eine Silikonhülse verwendet werden. Das erfindungsgemäße Verbindungsstück ist bevorzugt als T-Stück, Y-Stück oder Sammelglied ausgebildet. Das Sammelglied bündelt oder vereinzelt beispielsweise zwei, drei, vier, acht, zwölf, 16, 20, 24, 36, 48 oder mehr elektrische Hohlleiter, die als separate Leiter oder als Leiter eines Litzenleiters verwendet werden.

Die Kühlmittelleitung wird bevorzugt über eine Keramikhülse mit dem Verbindungsstück verbunden. Um eine adäquate Einführtiefe des elektrischen Hohlleiters in das Verbindungsstück zu gewährleisten, ist ein Tiefenanschlag vorgesehen. Ein zu tiefes Einführen würde zu einem Kurzschluss des elektrischen Hohlleiters mit dem Gehäuse oder der Kühlmittelleitung führen. Ein zu wenig tiefes Einführen würde auf Grund des hohen Druckes, der zumindest an einer Zulaufseite des Kühlkreislaufes herrscht, zu einem ungewollten Herausdrücken des elektrischen Hohlleiters aus dem Verbindungsstück führen. Die folgenden Verbindungstechniken sind zum Verbinden von Kühlmittelleitung und Hohlleiter über ein Verbindungsstück vorgesehen: Weichlöten, Hartlöten, Ultraschallschweißen, Einpressen, Einschrauben mit Pressring, Verschrauben mit Mutter, Nieten, Kleben, Eingießen, Einschmelzen mit Glas, Sintern oder Vulkanisieren. Nicht mit elektrischen Hohlleitern besetzte Hohlleiteröffnungen können mit denselben Techniken verschlossen werden. Alternativ kann anstatt eines elektrischen Hohlleiters ein Stück Volldraht als Stopfen oder ein Volldraht als Spulenanschluss in die Hohlleiteröffnung eingesetzt werden, ebenfalls unter Verwendung einer der genannten Techniken.

Bei Verbindungsstücken, die ein zwei- oder mehrteiliges Gehäuse aufweisen, können die Gehäuseteile derart ausgebildet sein, dass sie sich bei einem Zusammenführen selbständig zentrieren. Hierzu umfassen die Gehäuseteile zum Beispiel kegelstumpfförmige oder pyramidenstumpfförmige Bereiche.

Alternativ zu einem elektrisch leitenden Gehäuse als Kontaktelement in Verbindung mit einer elektrisch isolierenden Hülse als Trennelement kann ein elektrisch isolierendes Gehäuse das Trennelement und ein in oder an dem Gehäuse angeordnetes Leiterstück zum elektrischen Verbinden der Hohlleiteröffnungen das Kontaktelement sein. Unabhängig davon kann das Trennelement auch als elektrisch isolierender Schlauch ausgebildet sein, der zu einer Pumpe zum Pumpen des Kühlmittels führt. Ein zwischen dem Gehäuse und dem elektrischen Hohlleiter angeordneter Gehäuseeinsatz kann als Kontaktelement fungieren, wenn der Gehäuseeinsatz aus einem elektrisch leitenden Material besteht. Ein zwischen dem Gehäuse und dem elektrischen Hohlleiter angeordneter Gehäuseeinsatz kann als Trennelement fungieren, wenn der Gehäuseeinsatz aus einem elektrisch isolierenden Material besteht.

In einer weiteren Ausgestaltung ist eine erste Gruppe von elektrisch verbundenen Hohlleiteröffnungen mittels des Trennelementes oder eines weiteren Trennelementes von einer zweiten Gruppe von elektrisch verbundenen Hohlleiteröffnungen elektrisch isoliert. Die einzelnen Gruppen bilden separate Stromkreise, die beispielsweise zum Leiten von unterschiedlichen Phasen eines Drehstromes dienen. Neben zwei und drei Gruppen sind auch vier, fünf oder mehr Gruppen möglich.

In einer sehr vorteilhaften Ausgestaltung weisen die Hohlleiteröffnungen unterschiedliche Durchmesser auf. Somit kann ein einziges Verbindungsstück elektrische Hohlleiter mit unterschiedlichen Durchmessern versorgen. Beispielsweise können eine Primärwicklung und eine Sekundärwicklung eines Transformators unterschiedliche Hohlleiterdurchmesser aufweisen.

Erfindungsgemäß sind die folgenden Materialien vorgesehen, um daraus Verbindungsstücke herzustellen: Metalle, wie zum Beispiel Kupfer oder Stahl, thermoplastische Kunststoffe, duroplastische Kunststoffe, Keramiken oder Gläser. Metalle sind elektrisch leitend, leicht verarbeitbar und druckfest. Thermoplastische Kunststoffe sind leicht elastisch und somit relativ bruchsicher. Duroplastische Kunststoffe sind hochgradig maßhaltig und über einen großen Bereich hitzeresistent. Keramiken weisen eine hohe Festigkeit auf und deren Oberflächen lassen sich metallisieren, bevorzugt mit Kupfer, Silber oder Gold, was zum Herstellen von Lötverbindungen vorteilhaft ist. Gläser sind hochgradig spannungsfest.

In einer alternativen Ausgestaltung weist das Verbindungsstück kein Gehäuse auf. Stattdessen ist ein freies Ende eines elektrischen Hohlleiters oder freie Enden von zwei oder mehr elektrischen Hohlleitern direkt in einem freien Ende einer Kühlmittelleitung angeordnet und an oder in der Kühlmittelleitung befestigt, beispielsweise durch Weichlöten, Hartlöten, Ultraschallschweißen, Einpressen, Einschrauben in Innengewinde, Einschrauben mit Pressring, Verschrauben mit Mutter, Nieten, Kleben, Eingießen, Einschmelzen mit Glas, Sintern oder Vulkanisieren.

Elektromagnetische Maschinen sind allgemein bekannt und umfassen in der Regel eine Magneteinheit und eine mit der Magneteinheit in elektromagnetischer Wechselwirkung stehende Leitereinheit, wobei die Leitereinheit mindestens einen elektrischen Leiter aufweist. In dem Streben nach einer optimalen Leistung einer elektromagnetischen Maschine ist die elektrische Stromdichte in dem Leiter einer der wichtigsten Parameter. Die bei hohen Stromdichten vermehrt entstehende Wärme in dem Leiter stellt einen die Leistung limitierenden Faktor dar. Zur Abmilderung dieses begrenzenden Faktors ist eine effiziente Wärmeabfuhr von Nöten. Bei konventionellen elektromagnetischen Maschinen ist der Leiter als ein elektrisch und damit regelmäßig auch thermisch isolierter Draht ausgebildet, sodass eine lediglich unzureichende Wärmeabfuhr möglich ist und die praktisch realisierbare Stromdichte mangels ausreichender Kühlbarkeit des Leiters weit unter einer theoretisch möglichen Stromdichte liegt.

Mit der hier vorgeschlagenen elektrischen Maschine sind größere Stromdichten praktisch realisierbar. Experimentelle Daten zeigen, dass eine Erhöhung der Stromdichte im Dauerbetrieb von 6 A/mm² bei einem Drahtleiter auf 24 A/mm² bis 40 A/mm² bei dem erfindungsgemäßen elektrischen Hohlleiter möglich sind. Damit einhergehend erbringt die erfindungsgemäße elektromagnetische Maschine deutlich mehr Leistung. Im Vergleich zu einem gleich dimensionierten Volldrahtleiter erfordert der elektrische Hohlleiter weniger Material, um den Leiter zu bilden, sodass der elektrische Hohlleiter zu einem reduzierten Gesamtgewicht der erfindungsgemäßen elektromagnetischen Maschine beiträgt. Der elektrische Hohlleiter kann so klein dimensioniert sein, dass Effekte auf Grund von Kapillarkräften in dem hohlen Innerraum nicht vernachlässigbar sind. In diesem Fall könnte der elektrische Hohlleiter auch als Kapillarleiter bezeichnet werden. Da sich bei hohen Frequenzen, beispielsweise größer 10 kHz, insbesondere größer 30 kHz, besonders bevorzugt größer 100 kHz, der Skin-Effekt deutlich bemerkbar macht, ist ein leitendes Inneres eines Volldrahtleiters ohnehin nicht mehr zwingend erforderlich, um große Stromstärken zu leiten.

Der erfindungsgemäße elektrische Hohlleiter ist gleichermaßen für Synchronmaschinen als auch für Asynchronmaschinen geeignet. Selbsterregte Synchronmaschinen erfordern keine Magnete und eine belastungsabhängige Nachregelung eines Erregerstromes ist möglich. Permanent erregte Synchronmaschinen verfügen deshalb über ein sehr gutes Leistungsgewicht. Mittels der internen und damit direkten Kühlung der Leitereinheit sind hohe Stromdichten realisierbar, die zu noch mehr Leistung führen. Weiterhin kann der erfindungsgemäße elektrische Hohlleiter zum Wickeln von Zahnspulen, beispielsweise für Synchronmaschinen, verwendet werden. Zahnspulen sind prozesstechnisch einfach herstellbar und weisen kleine Wickelkopflängen auf, sodass mehr aktives ferromagnetisches Material zur Verfügung steht. Auch Asynchronmaschinen erfordern keine Magnete. Zusätzlich kann ein Rotor von Asynchronmaschinen sehr einfach als Kurzschlussläufer aufgebaut sein.

Darüber hinaus kann die elektromagnetische Maschine mindestens ein erfindungsgemäßes Verbindungsstück aufweisen. Bevorzugt ist das Verbindungsstück als T-Stück, Y-Stück oder Sammelglied ausgebildet. Das Verbindungsstück erlaubt eine hydraulische oder pneumatische Kopplung der elektrischen Hohlleiter und der Kühlmittelleitung, eine elektrische Kopplung der elektrischen Hohlleiter und eine elektrische Entkopplung der Kühlmittelleitung. Zusätzlich vereint oder vereinzelt das als Sammelstück ausgebildete Verbindungsstück eine Vielzahl an elektrischen Hohlleitern.

In einer besonders vorteilhaften Ausgestaltung der vorliegenden Erfindung ist vorgesehen, dass die elektromagnetische Maschine eine Kühleinheit aufweist, wobei die Kühleinheit eine Pumpe und den elektrischen Hohlleiter und gegebenenfalls Verbindungsstücke umfasst, wobei die Pumpe ein Kühlmittel durch den elektrischen Hohlleiter pumpend ausgebildet ist. Die Pumpe kann direkt von der elektromagnetischen Maschine angetrieben werden, beispielsweise kann die Pumpe mit einer Welle der elektromagnetischen Maschine in Wirkverbindung stehen, oder indirekt mittels eines separaten Pumpenantriebes. Die Verbindungsstücke, so vorhanden, sind bevorzugt als erfindungsgemäße Verbindungsstücke ausgebildet. Das Kühlmittel besteht aus einem elektrisch isolierenden Fluid, das bevorzugt eine hohe Wärmekapazität und einen hohen Wärmeleitkoeffizienten aufweist. Die Verwendung des elektrischen Hohlleiters als ein Element der Kühleinheit der elektromagnetischen Maschine ermöglicht ein sehr effizientes Abführen von leistungslimitierender Wärme, da die Wärme, auch thermische Energie genannt, dort abgeführt wird, wo sie entsteht, nämlich in dem Körper des elektrischen Hohlleiters. Auf Grund der dem Stand der Technik überlegenen Wärmeabfuhr verfügt die erfindungsgemäße elektromagnetische Maschine über einen deutlich erhöhten Wirkungsgrad und somit über eine optimale Leistung. Bei der erfindungsgemäßen elektromagnetischen Maschine sind Stromdichten von etwa 40 A/mm² möglich, wohingegen eine Wassermantelkühlung oder eine Ölnebelkühlung nur etwa 12 A/mm² und eine Luftkühlung nur etwa 3 A/mm² zulassen.

In einer vorteilhaften Ausgestaltung der vorliegenden Erfindung ist vorgesehen, dass die Magneteinheit und die Leitereinheit zu einer Rotationsachse symmetrisch ausgebildet, zu der Rotationsachse koaxial angeordnet und relativ zueinander um die Rotationsachse drehbar ausgebildet sind, wobei die Magneteinheit mindestens zwei Magnete umfasst, wobei jeder der Magnete einen Nordpol und einen Südpol aufweist, und wobei der elektrische Hohlleiter alternierend induktionsaktive Segmente und induktionspassive Segmente aufweist, wobei bei mindestens einer Orientierung der Leitereinheit relativ zu der Magneteinheit die induktionsaktiven Segmente ausschließlich gegenüber zwischen Nordpolen und Südpolen existierenden neutralen Zonen angeordnet sind. Mit großem Vorteil ermöglicht diese Anordnung von elektrischem Hohlleiter zu Magnet einen besonders effektiven zeitlichen Verlauf der Induktion, der wesentlich zu einer optimalen Leistung der elektromagnetischen Maschine beiträgt. Magnete im Sinne der vorliegenden Erfindung können sowohl Permanentmagnete als auch Elektromagnete sein. Letztere weisen in der Regel eine Spule auf, mit deren Hilfe ein Eisenkern magnetisiert oder auch erregt wird. Elektromagnete aufweisende Anordnungen werden deshalb auch als eisenerregte Anordnungen bezeichnet. Neutrale Zonen können sich zwischen dem Nordpol und dem Südpol eines einzigen Magneten oder zwischen Polen von zwei oder mehr aneinander angrenzenden oder zueinander beabstandeten Magneten ausbilden. Generell bedingt die Anordnung der Pole eine geometrische Ausdehnung der neutralen Zone, die scharf umrissen oder diffus und klein oder groß, beispielsweise mehrere bis dutzende Zentimeter, sein kann.

In einer ersten spezifischen Weiterbildung der vorliegenden Erfindung ist die Magneteinheit als ein äußerer Hohlzylinder und ein in dem äußeren Hohlzylinder angeordneter innerer Hohlzylinder ausgebildet, wobei zwischen dem äußeren Hohlzylinder und dem inneren Hohlzylinder ein Spalt zum Aufnehmen der Leitereinheit angeordnet ist und wobei die neutralen Zonen zu der Rotationsachse parallel angeordnet sind. Eine solche Magneteinheit stellt in dem Spalt ein Magnetfeld bereit, das bestens geeignet ist, um eine in dem Spalt angeordnete Leitereinheit effektiv zu durchfluten und somit eine hohe Induktion zu gewährleisten. Der äußere Hohlzylinder und der innere Hohlzylinder sind zu der Rotationsachse drehstarr miteinander verbunden. Beispielsweise umfasst der äußere Hohlzylinder zwölf Magnete, die entlang einer Umfangsrichtung des äußeren Hohlzylinders hinsichtlich der Polung gleichorientiert und gleichmäßig verteilt angeordnet sind, sodass sich eine Polsequenz von Nord-Süd-Nord-Süd und so weiter ergibt. Somit werden neutrale Zonen sowohl beim Übergang vom Nordpol zum Südpol eines Magneten als auch zwischen zwei benachbarten Magneten bereitgestellt. Auf den äußeren Hohlzylinder abgestimmt umfasst der innere Hohlzylinder ebenfalls zwölf Magnete, die entlang einer zu der Umfangsrichtung des äußeren Hohlzylinders inversen Umfangsrichtung des inneren Hohlzylinders hinsichtlich der Polung gleichorientiert und gleichmäßig verteilt angeordnet sind, sodass sich eine Polsequenz von Nord-Süd-Nord-Süd und so weiter ergibt. Die Orientierung des äußeren Hohlzylinders relativ zu dem inneren Hohlzylinder ist so gewählt, dass jeder Nordpol des äußeren Hohlzylinders diesseits des Spalts einem Südpol des inneren Hohlzylinders jenseits des Spalts gegenüberliegt. Somit werden neutrale Zonen beim Übergang vom Nordpol zum Südpol eines Magneten, zwischen zwei benachbarten Magneten innerhalb eines Hohlzylinders und zwischen zwei durch den Spalt getrennten Polen bereitgestellt. Die Anzahl an Magneten pro Hohlzylinder kann auch zwei, vier, sechs, acht, zehn, 16, 20, 24, 28, 32, 36, 40, 80, 120, 160, 200 oder 500 betragen. Eine große Anzahl an Magneten führt bei hohen Drehzahlen und durchschnittlicher Stromstärke zu sehr hohen Drehmomenten der erfindungsgemäßen elektromagnetischen Maschine.

In einer zweiten spezifischen Weiterbildung ist die Magneteinheit als eine erste Scheibe und eine neben der ersten Scheibe angeordnete zweite Scheibe ausgebildet, wobei zwischen der ersten Scheibe und der zweiten Scheibe ein Spalt zum Aufnehmen der Leitereinheit angeordnet ist und wobei die neutralen Zonen zu der Rotationsachse radial angeordnet sind. Eine solche Magneteinheit stellt in dem Spalt ein Magnetfeld bereit, das bestens geeignet ist, um eine in dem Spalt angeordnete Leitereinheit effektiv zu durchfluten und somit eine hohe Induktion zu gewährleisten. Die erste Scheibe und die zweite Scheibe sind zu der Rotationsachse drehstarr miteinander verbunden. Beispielsweise umfasst die erste Scheibe zwölf Magnete, die entlang einer Umfangsrichtung der ersten Scheibe hinsichtlich der Polung gleichorientiert und gleichmäßig verteilt angeordnet sind, sodass sich eine Polsequenz von Nord-Süd-Nord-Süd und so weiter ergibt. Somit werden neutrale Zonen sowohl beim Übergang vom Nordpol zum Südpol eines Magneten als auch zwischen zwei benachbarten Magneten bereitgestellt. Auf die erste Scheibe abgestimmt umfasst die zweite Scheibe ebenfalls zwölf Magnete, die entlang einer zu der Umfangsrichtung der ersten Scheibe inversen Umfangsrichtung der zweite Scheibe hinsichtlich der Polung gleichorientiert und gleichmäßig verteilt angeordnet sind, sodass sich eine Polsequenz von Nord-Süd-Nord-Süd und so weiter ergibt. Die Orientierung der ersten Scheibe relativ zu der zweiten Scheibe ist so gewählt, dass jeder Nordpol der ersten Scheibe diesseits des Spalts einem Südpol der zweiten Scheibe jenseits des Spalts gegenüberliegt. Somit werden neutrale Zonen beim Übergang vom Nordpol zum Südpol eines Magneten, zwischen zwei benachbarten Magneten innerhalb einer Scheibe und zwischen zwei durch den Spalt getrennten Polen bereitgestellt. Die Anzahl an Magneten pro Scheibe kann auch zwei, vier, sechs, acht, zehn, 16, 20, 24, 28, 32, 36, 40, 80, 120, 160, 200 oder 500 betragen. Eine große Anzahl an Magneten führt bei hohen Drehzahlen und durchschnittlicher Stromstärke zu sehr hohen Drehmomenten der erfindungsgemäßen elektromagnetischen Maschine.

Die elektromagnetische Maschine weist bevorzugt ein Verbindungselement zum Verbinden von Hohlzylindern beziehungsweise Scheiben von Magneteinheiten auf. Das Verbindungselement wirkt als ein dreidimensionales Joch zum Verstärken von Magnetfeldern in Bereichen, die zum Aufnehmen von Leitereinheiten ausgebildet sind.

Für die erste spezifische Weiterbildung der vorliegenden Erfindung ist die Leitereinheit als ein Hohlzylinder ausgebildet, wobei die induktionsaktiven Segmente zu der Rotationsachse parallel angeordnet sind. Vorzugsweise weist der Hohlzylinder einen Durchmesser auf, der identisch zu einem Durchmesser des zylinderförmigen Spalts ist. Ebenfalls bevorzugt weist der Hohlzylinder eine Wandstärke auf, die geringfügig kleiner als eine Breite des zylinderförmigen Spalts ist. Somit passt die Leitereinheit bis auf zwei schmale Luftspalte zwischen der Leitereinheit und der Magneteinheit exakt in die Magneteinheit. Eine derartige Kombination von Magneteinheit und Leitereinheit ist bestens geeignet, um die in dem Spalt angeordnete Leitereinheit effektiv zu durchfluten und somit eine hohe Induktion zu gewährleisten. Der elektrische Hohlleiter ist schlaufenartig angeordnet und mit einem Träger verbunden, insbesondere in eine Nut des Trägers eingelassen und mit Epoxidharz vergossen. Die Leiterschlaufen sind dabei so geformt, dass die induktionsaktiven Segmente länger sind als die induktionspassiven Segmente. Der elektrische Hohlleiter kann in mehreren Windungen angeordnet sein, beispielsweise in zwei bis 100, insbesondere in 24 mit vier Windungen pro Lage und sechs Lagen.

Für die zweite spezifische Weiterbildung der vorliegenden Erfindung ist die Leitereinheit als eine Scheibe ausgebildet, wobei die induktionsaktiven Segmente zu der Rotationsachse radial angeordnet sind. Vorzugsweise weist die Scheibe eine Dicke auf, die geringfügig kleiner als eine Breite des Spalts ist. Somit passt die Leitereinheit bis auf zwei schmale Luftspalte zwischen der Leitereinheit und der Magneteinheit exakt in die Magneteinheit. Eine derartige Kombination von Magneteinheit und Leitereinheit ist bestens geeignet, um die in dem Spalt angeordnete Leitereinheit effektiv zu durchfluten und somit eine hohe Induktion zu gewährleisten. Der elektrische Hohlleiter ist schlaufenartig angeordnet und mit einem Träger verbunden, insbesondere in eine Nut des Trägers eingelassen und mit Epoxidharz vergossen. Die Leiterschlaufen sind dabei so geformt, dass die induktionsaktiven Segmente länger sind als die induktionspassiven Segmente. Der elektrische Hohlleiter kann in mehreren Windungen angeordnet sein, beispielsweise in zwei bis 100, insbesondere in 24 mit vier Windungen pro Lage und sechs Lagen.

In einer weiterführenden Ausgestaltung der vorliegenden Erfindung ist der elektrische Hohlleiter als Litzenleiter ausgebildet. Dieser Litzenleiter umfasst eine Vielzahl an elektrischen Einzelhohlleitern, die gemeinsam die Litze bilden. Im Vergleich zu einem gleich dimensionierten Volldraht weist der Litzenleiter eine wesentlich größere Oberfläche auf, die bei hohen Frequenzen, beispielsweise größer 10 kHz, insbesondere größer 30 kHz, besonders bevorzugt größer 100 kHz, auf Grund des Skin-Effekts eine Leitung von großen Strömen, beispielsweise 16 A/mm², 20 A/mm² oder 24 A/mm² Leiterquerschnittsfläche, ermöglicht. Hierzu weist der Litzenleiter zwei bis 400 oder mehr, insbesondere 32, Einzelhohlleiter auf, die gegeneinander elektrisch isoliert sind. Gegeneinander elektrisch isolierte Einzelhohlleiter teilen die große Querschnittsfläche des elektrischen Hohlleiters in mehrere, bevorzugt viele, kleine Querschnittsflächen der Einzelhohlleiter auf, was ein Entstehen von wirkungsgradherabsetzenden Wirbelströmen hemmt.

Es ist erfindungsgemäß mit großem Vorteil vorgesehen, dass ein Längenverhältnis der induktionsaktiven Segmente zu den induktionspassiven Segmenten größer oder gleich 3:1 ist, insbesondere gleich 4:1, 5:1, 6:1, 8:1, 10:1, 15:1, 20:1 oder 30:1, da nur die induktionsaktiven Segmente dem Transfer von mechanischer Energie in elektrische Energie oder vice versa dienen und damit dem Wirkungsgrad der elektromagnetischen Maschine zuträglich sind. Die induktionspassiven Segmente hingegen reduzieren den Wirkungsgrad, da sie elektrische Widerstände darstellen, die die Stromleitung hemmen und zu Energieverlusten in Form von Abwärme führen. Im Allgemeinen führt bereits ein Längenverhältnis der induktionsaktiven Segmente zu den induktionspassiven Segmenten von größer 1:1 zu einer Erhöhung des Wirkungsgrades einer beliebig ausgestalteten und nicht zwingend erfindungsgemäßen elektromagnetischen Maschine im Vergleich zu derselben elektromagnetischen Maschine mit gleichlangen induktionsaktiven und induktionspassiven Segmenten.

Die elektromagnetische Maschine kann eisenkernfrei ausgebildet sein, wie insbesondere bei der ersten und zweiten spezifischen Weiterbildung der vorliegenden Erfindung. Ein Eisenkern für die Leitereinheit ist auf Grund der Anordnung der Leitereinheit in der Magneteinheit nicht erforderlich, um eine ausreichende magnetische Durchflutung der Leitereinheit zu gewährleisten. Durch das Nichtvorhandensein eines Eisenkerns oder Blechpakets weist die elektromagnetische Maschine ein geringes Gesamtgewicht auf, ist wenig träge und leidet nicht unter Hysterese. Folglich ist eine derart ausgebildete elektromagnetische Maschine für Luft- und Raumfahrtzwecke und für starke Beschleunigungen und Verzögerungen bestens geeignet und verfügt über einen hohen Wirkungsgrad.

Die erfindungsgemäße elektromagnetische Maschine kann so ausgebildet sein, dass die Magneteinheit ein Rotor, insbesondere ein Doppelrotor, und die Leitereinheit ein Stator der elektromagnetischen Maschine ist. Alternativ dazu ist erfindungsgemäß vorgesehen, dass die Magneteinheit ein Stator, insbesondere ein Doppelstator, und die Leitereinheit ein Rotor der elektromagnetischen Maschine sein kann. Einerseits kann die erste Alternative vorteilhaft sein, da ein Abgreifen einer Spannung von dem elektrischen Hohlleiter beziehungsweise ein Anlegen einer Spannung an den elektrischen Hohlleiter apparativ einfacher umzusetzen ist. Andererseits kann die zweite Alternative vorteilhaft sein, da die Leitereinheit auf Grund ihres geringen Eigengewichts im Vergleich zu der Magneteinheit weniger träge ist, sodass der Rotor bei einem Beschleunigen weniger Energie aufnimmt.

Die erfindungsgemäße elektromagnetische Maschine ist beispielsweise als Motor, Generator, Motor-Generator-Kombination oder Schwungmassenspeicher und damit in zwei- oder mehrrädrigen Fahrzeugen mit einem elektrischen Antrieb oder einer Rekuperationsbremsanlage, Dampfturbinen, Gasturbinen, Windkraftanlagen, Werkzeugmaschinen, Pumpen, Modellflugzeugen, Drohnen und anderen elektrischen Vorrichtungen einsetzbar. Insbesondere ist die elektromagnetische Maschine gemäß der vorliegenden Erfindung für Anwendung mit hohen Drehzahlen, zum Beispiel von 10 kHz bis 100 kHz oder mehr, bestens geeignet. Die obere Frequenzgrenze ist apparativ durch die zur Verfügung stehenden elektrischen oder elektronischen Schaltelemente bedingt. Je nach Anwendung kann auf wirkungsgradreduzierende Getriebe verzichtet werden.

Ein weiteres Anwendungsgebiet für den erfindungsgemäßen elektrischen Hohlleiter sind Verdampfungsrohre als Teil einer Kühleinheit einer elektromagnetischen Maschine. Zusätzlich sei erwähnt, dass in oder an dem rohrförmigen Körper des elektrischen Hohlleiters supraleitendes Material befestigt sein kann, um die elektrische Leitfähigkeit weiter zu verbessern. Hierzu ist beispielsweise ein entsprechender Rohrmantel unter der elektrisch isolierenden Schicht vorgesehen, um den Biege- und Festigkeitseigenschaften des supraleitenden Materials gerecht zu werden. In einer bevorzugten Ausgestaltung ist der Körper des elektrischen Hohlleiters mit einer optionalen Trennschicht ummantelt, die mit dem supraleitenden Material ummantelt ist, das mit der isolierenden Schicht ummantelt ist. Das supraleitende Material kann beispielsweise ein keramischer Supraleiter, insbesondere Hochtemperatursupraleiter, sein.

Die vorliegende Erfindung wird unter Bezugnahme auf die Zeichnungen beispielhaft beschrieben, wobei weitere vorteilhafte Einzelheiten den Figuren der Zeichnungen zu entnehmen sind. Gleiche Bezugszeichen bezeichnen figurenübergreifend gleiche Teile.

Die Figuren 3 bis 17 dienen der Veranschaulichung weiterer Komponenten, die in einer erfindungsgemäßen elektrischen Maschine eingesetzt werden können. Die Figuren der Zeichnungen zeigen im Einzelnen:
Fig. 1 eine schematische perspektivische Ansicht eines elektrischen Hohlleiters für eine erfindungsgemäße elektrische Maschine;
Fig. 2 eine schematische perspektivische Ansicht einer Litze, die drei elektrische Hohlleiter umfasst;
Fig. 3 eine schematische perspektivische Ansicht eines Verbindungsstückes gemäß einer ersten Ausführungsform;
Fig. 4 eine schematische perspektivische Ansicht eines Verbindungsstückes gemäß einer zweiten Ausführungsform;
Fig. 5 eine schematische perspektivische Ansicht eines optionalen Teils des Verbindungsstückes gemäß der zweiten Ausführungsform ;
Fig. 6 eine schematische perspektivische Ansicht eines anderen optionalen Teils des Verbindungsstückes gemäß der zweiten Ausführungsform;
Fig. 7 eine schematische Schnittansicht eines Verbindungsstückes gemäß einer dritten Ausführungsform;
Fig. 8 eine schematische Schnittansicht eines Verbindungsstückes gemäß einer vierten Ausführungsform;
Fig. 9 eine schematische Schnittansicht eines Verbindungsstückes gemäß einer fünften Ausführungsform;
Fig. 10 eine schematische perspektivische Ansicht des Verbindungsstückes gemäß der fünften Ausführungsform;
Fig. 11 eine schematische Schnittansicht eines Verbindungsstückes gemäß einer sechsten Ausführungsform;
Fig. 12 eine schematische Schnittansicht eines Verbindungsstückes gemäß einer siebten Ausführungsform;
Fig. 13 eine schematische Schnittansicht eines Verbindungsstückes gemäß einer achten Ausführungsform;
Fig. 14 eine schematische Schnittansicht eines Gehäuseeinsatzes eines Verbindungsstückes;
Fig. 15 eine schematische Schnittansicht eines Gehäuseeinsatzes eines Verbindungsstückes;
Fig. 16 eine schematische Schnittansicht eines Gehäuseeinsatzes eines Verbindungsstückes;
Fig. 17 eine schematische Schnittansicht eines Gehäuseeinsatzes eines Verbindungsstückes;
Fig. 18 eine schematische Ansicht einer elektromagnetischen Maschine gemäß einer ersten Ausführungsform der vorliegenden Erfindung;
Fig. 19 eine schematische perspektivische Ansicht einer Magneteinheit einer elektromagnetischen Maschine gemäß einer zweiten Ausführungsform der vorliegenden Erfindung;
Fig. 20 eine schematische perspektivische Ansicht einer Leitereinheit der elektromagnetischen Maschine gemäß der zweiten Ausführungsform der vorliegenden Erfindung;
Fig. 21 eine schematische perspektivische Ansicht eines Teils einer Magneteinheit einer elektromagnetischen Maschine gemäß einer dritten Ausführungsform der vorliegenden Erfindung;
Fig. 22 eine schematische perspektivische Ansicht einer Leitereinheit der elektromagnetischen Maschine gemäß der dritten Ausführungsform der vorliegenden Erfindung; und
Fig. 23 ein Diagramm, das zeitaufgelöst gemessene wesentliche Parameter für einen Betrieb einer elektromagnetischen Maschine gemäß der vorliegenden Erfindung darstellt.

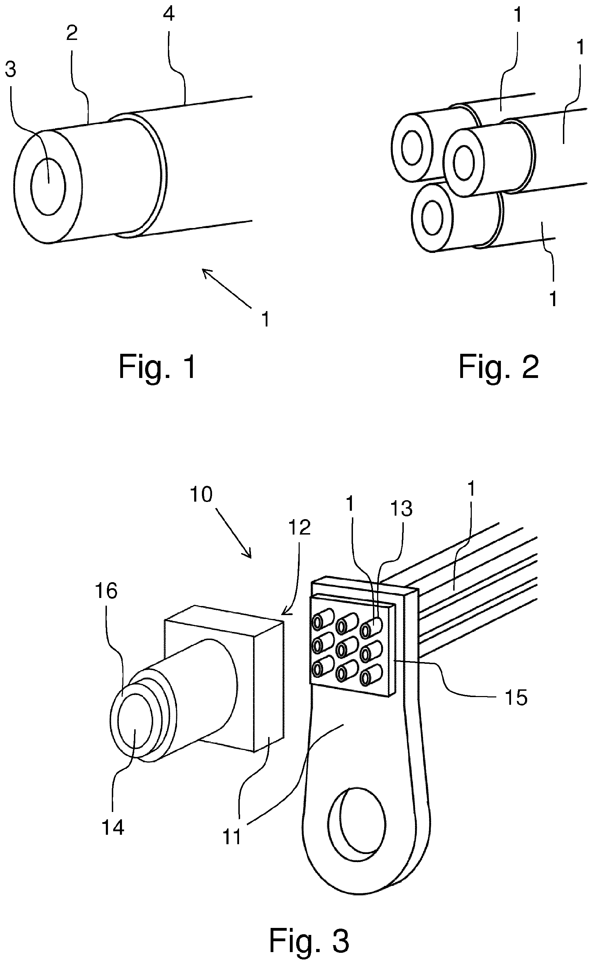

Die Fig. 1 zeigt eine schematische perspektivische Ansicht eines elektrischen Hohlleiters 1 für eine erfindungsgemäße elektrische Maschine. Der elektrische Hohlleiter 1 hat die Gestalt eines rundrohrförmigen Körpers 2, der einen hohlen Innenraum 3 aufweist. Der Körper 2 besteht aus einem elektrisch leitfähigen Material, nämlich aus einer Kupferlegierung. Weiterhin weist der Körper 2 einen Außendurchmesser und einen Innendurchmesser auf. Der Körper 2 ist an einer äußeren Mantelfläche des Körpers 2 mit einer elektrisch isolierenden Schicht 4 aus Isolierlack beschichtet. Der Innenraum 3 verbindet ein erstes offenes Ende des Körpers 2 und ein zweites offenes Ende des Körpers 2 hydraulisch und pneumatisch. Der Außendurchmesser beträgt 3 mm und der Innendurchmesser beträgt 2 mm. Somit ist ein Verhältnis von Außendurchmesser zu Innendurchmesser gleich 1,5:1. Auf Grund seiner Dimensionierung ist der elektrische Hohlleiter 1 mit großem Vorteil zum kontinuierlichen Wickeln einer elektromagnetischen Spule einer kleinen oder mittleren elektromagnetischen Maschine geeignet.

Die **Fig. 2** zeigt eine schematische perspektivische Ansicht einer Litze, die drei elektrische Hohlleiter 1 umfasst. In der Regel umfasst eine Litze von drei bis mehrere hundert elektrische Hohlleiter 1. Die in **Fig. 2** dargestellten elektrischen Hohlleiter 1 sind gegeneinander elektrisch isoliert mittels einer Schicht 4 aus Isolierlack. Alternativ dazu könnte die Schicht 4 fehlen, sodass sich die elektrischen Hohlleiter 1 an den äußeren Mantelflächen der Körper 2 elektrisch leitend berühren würden.

Die **Fig.** 3 zeigt eine schematische perspektivische Ansicht eines Verbindungsstückes 10. Das Verbindungsstück 10 dient zum Verbinden einer Vielzahl an elektrischen Hohlleitern 1 und einer Kühlmittelleitung. Das in **Fig.** 3 dargestellte Verbindungsstück 10 ist als ein Sammelglied zum elektrischen und hydraulischen Zusammenführen beziehungsweise Vereinzeln der Vielzahl an elektrischen Hohlleitern 1 ausgebildet. Das Verbindungsstück 10 umfasst ein fluiddichtes Gehäuse 11, das einen hohlen Innenraum 12 aufweist. Das Gehäuse 11 ist zweiteilig ausgebildet, kann aber auch einteilig oder mehrteilig ausgebildet sein. Zum besseren Verständnis ist das Gehäuse 11 geöffnet dargestellt. Weiterhin umfasst das Verbindungsstück 10 eine Vielzahl an Hohlleiteröffnungen 13, gezeigt sind der Übersichtlichkeit halber nur neun, in dem Gehäuse 11 zum Aufnehmen von offenen Enden der elektrischen Hohlleiter 1 und eine Kühlmittelleitungsöffnung 14 in dem Gehäuse 11 zum Aufnehmen eines offenen Endes der Kühlmittelleitung. Der Innenraum 12 verbindet die Hohlleiteröffnungen 13 und die Kühlmittelleitungsöffnung 14 hydraulisch und pneumatisch. Das Verbindungsstück 10 weist ein elektrisch leitendes Kontaktelement 15 und ein elektrisch isolierendes Trennelement 16 auf, wobei das Kontaktelement 15 die Hohlleiteröffnungen 13 elektrisch verbindend ausgebildet ist und wobei das Trennelement 16 zwischen einerseits dem Kontaktelement 15 und den Hohlleiteröffnungen 13 und andererseits der Kühlmittelleitungsöffnung 14 elektrisch isolierend angeordnet ist. Bei dem in **Fig. 3** dargestellten Verbindungsstück 10 ist das Kontaktelement 15 das Gehäuse 11. Insbesondere ist ein Teil des zweiteiligen Gehäuses 11 als eine eine Vielzahl an Bohrungen aufweisende Kontaktplatte ausgebildet, die in eine Kontaktöse übergehend geformt ist. In einem Bereich der Bohrungen ist die Kontaktplatte dicker ausgeführt, da dort die die Bohrungen durchsetzenden elektrischen Hohlleiter 1 mit der Kontaktplatte verlötet sind. Das Trennelement 16 ist als eine das Gehäuse 11 durchsetzende elektrisch isolierende Hülse ausgebildet, wobei ein hohles Inneres der elektrisch isolierenden Hülse die Kühlmittelleitungsöffnung 14 bereitstellt. Die elektrisch isolierende Hülse ist insbesondere eine Keramikhülse. Die Kontaktöse des Kontaktelementes 15 ist ein einziger elektrischer Speisepunkt, um die Vielzahl an elektrischen Hohlleitern 1 zu bestromen. Die Kühlmittelleitungsöffnung 14 ist ein einziger hydraulischer Speisepunkt, um die Vielzahl an elektrischen Hohlleitern 1 mit dem Kühlmittel zu versorgen. Analoges gilt für ein Abgreifen des Stromes an der Kontaktöse beziehungsweise ein Ausleiten des Kühlmittels. Ein Innendurchmesser der Kontaktöse beträgt etwa 10 mm. Das Kühlmittel besteht aus einem elektrisch isolierenden Fluid, zum Beispiel Trafoöl, Therminol^{®}, Galden^{®} oder Kohlenstoffdioxid.

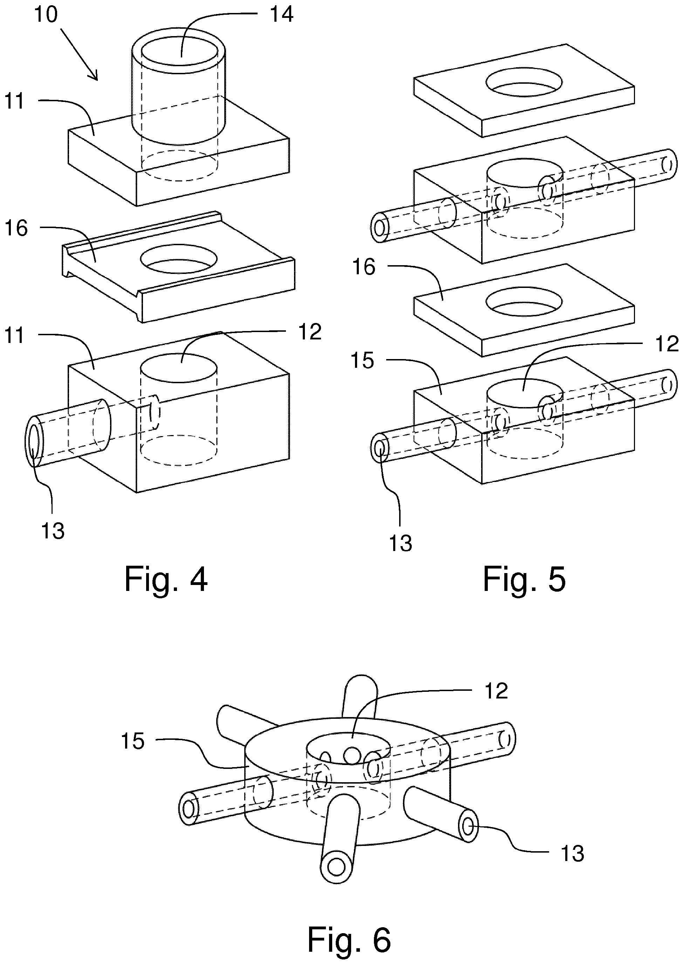

Die **Fig. 4** zeigt eine schematische perspektivische Ansicht eines Verbindungsstückes 10 gemäß einer zweiten Ausführungsform. Das Verbindungsstück 10 ist als ein Anfangsstück oder ein Endstück ausgebildet, das den elektrischen Hohlleiter 1 mit der Kühlmittelleitung verbindet, bevor beziehungsweise nachdem der elektrische Hohlleiter 1 eine elektromagnetische Spule bildet. Das Verbindungsstück 10 ist modular aufgebaut und kann um beliebige Module erweitert werden. Das Gehäuse 11 ist zweiteilig ausgebildet und umfasst eine Kühlmittelleitungsöffnung 14 und eine Hohlleiteröffnung 13. Optional sind die beiden Teile des Gehäuses 11 mittels einer elektrisch isolierenden Platte separiert, wie man sie in der explosionsartigen Darstellung der **Fig. 4** erkennen kann. Die elektrisch isolierende Platte stellt ein Trennelement 16 zum elektrischen Isolieren der beiden Teile des Gehäuses 11 bereit. Wulstige Randbereiche der elektrisch isolierenden Platte dienen als Abstandhalter zum Beabstanden einer Spannvorrichtung zum Verbinden von Modulen des Verbindungsstückes 10, um ein Kurzschließen der beiden Teile des Gehäuses 11 durch die Spannvorrichtung zu vermeiden, und als Führung zum gleichmäßigen Ausrichten der Module. Die elektrisch isolierende Platte kann wulstige Randbereiche aufweisen oder auch nicht. Der Innenraum 12 ist durch Bohrungen gebildet, die sämtliche Bauteile bis auf eine in **Fig. 4** nicht dargestellte Abschlussplatte durchsetzen und in einem zusammengesetzten Zustand des Verbindungsstückes 10 deckend übereinander angeordnet sind. Die beiden Teile des Gehäuses 11 können unabhängig voneinander aus einem elektrisch isolierenden Material oder einem elektrisch leitenden Material bestehen. Vorzugsweise bestehen die beiden Teile des Gehäuses 11 aus einem Metall, um ein ausreichend druckfestes Gehäuse 11 anzugeben. Die Kühlmittelleitungsöffnung 14 und die Hohlleiteröffnung 13 sind durch rohrförmige Abschnitte bereitgestellt, die entweder Formelemente der Teile des Gehäuses 11 oder zu den Teilen des Gehäuses 11 separate Bauteile sind.

Die **Fig. 5** zeigt eine schematische perspektivische Ansicht eines optionalen Teils des Verbindungsstückes 10 gemäß der zweiten Ausführungsform. Das Verbindungsstück 10 ist modular aufgebaut und kann um beliebig viele Kontaktelemente 15 zum Aufnehmen von elektrischen Hohlleitern 1 und elektrisch isolierende Platten als Trennelemente 16 erweitert werden. Die elektrisch isolierenden Platten können wulstige Randbereiche aufweisen. Einzelne Kontaktelemente 15 können untereinander kurzgeschlossen sein, beispielsweise durch Weglassen einer elektrisch isolierenden Platte, jedoch zwischen jedem der Kontaktelemente 15 und der Kühlmittelleitungsöffnung 14 ist mindestens eine elektrisch isolierende Platte angeordnet, um die Kühlmittelleitungsöffnung 14 elektrisch neutral zu halten. Durch ein Stapeln der einzelnen Module baut sich der Innenraum 12 auf.

Allgemein weisen die modularen Verbindungsstücke 10 bevorzugt eine Spannvorrichtung auf, um die einzelnen Module des Verbindungsstückes 10 zusammenzuhalten. Die Spannvorrichtung kann eine zentral angeordnete Schraube oder Gewindestange oder eine oder mehrere außen angeordnete Klammern umfassen.

Die **Fig. 6** zeigt eine schematische perspektivische Ansicht eines anderen optionalen Teils des Verbindungsstückes 10 gemäß der zweiten Ausführungsform. Dieses Kontaktelement 15 des Verbindungsstückes 10 ist sternförmig ausgebildet und umfasst sechs Hohlleiteröffnungen 13 in hexagonaler Anordnung, die den Innenraum 12 symmetrisch einfassen. Alternativ zu sechs Hohlleiteröffnungen 13 kann das Verbindungsstück 10 beliebig viele Hohlleiteröffnungen 13 aufweisen, beispielsweise zwei, drei, vier, fünf, sieben, acht, zehn oder mehr. Auch können die Hohlleiteröffnungen 13 unregelmäßig angeordnet sein.

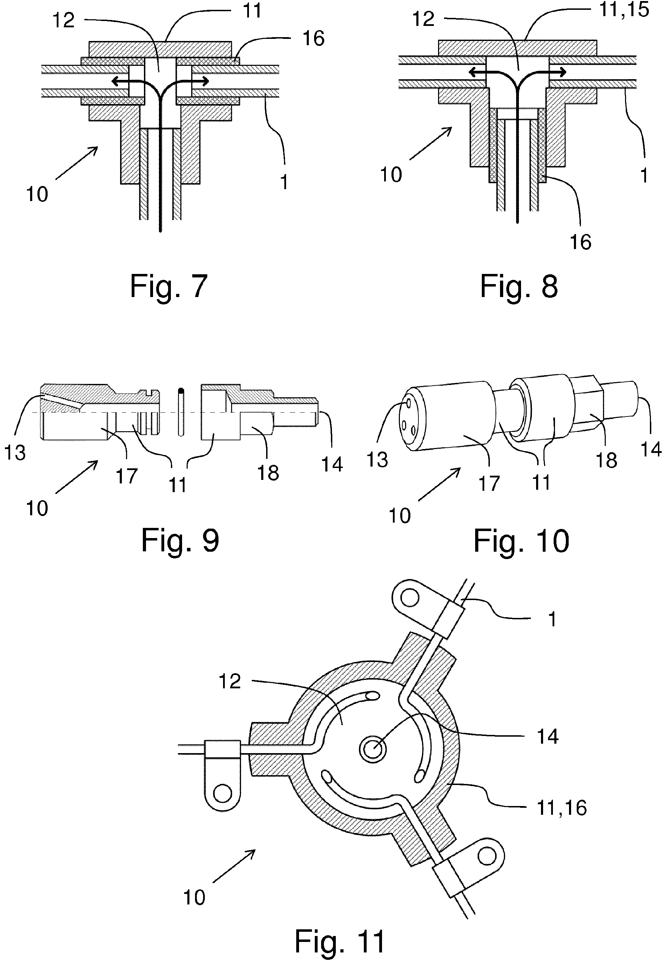

Die **Fig. 7** zeigt eine schematische Schnittansicht eines Verbindungsstückes 10 gemäß einer dritten Ausführungsform. Das Verbindungsstück 10 ist ein T-Stück und mit zwei Trennelementen 16 ausgestattet, die das metallische Gehäuse 11 von den zwei Hohlleiteröffnungen 13 elektrisch trennen. Somit sind beide elektrischen Hohlleiter 1 und die Kühlmittelleitung voneinander elektrisch isoliert. Die Trennelemente 16 sind elektrisch isolierende Hülsen, insbesondere Keramikhülsen, die innen und außen metallisiert sind. Ein Kontaktelement 15 zum Verbinden der elektrischen Hohlleiter 1 könnte ein in dem Gehäuse 11 eingelassenes Leiterband sein, das sich von einer Hohlleiteröffnung 13 zu der anderen Hohlleiteröffnung 13 erstrecken würde. Ein Kontaktelement 15 zum Verbinden der elektrischen Hohlleiter 1 könnte auch eine extern angeordnete elektrisch leitende Verbindung sein. Keine dieser optionalen Ausführungen ist in **Fig. 7** dargestellt. Das Gehäuse 11 ist aus einem Metall aufgebaut, könnte aber auch aus einem Kunststoff bestehen. Der in dem Innenraum 12 wiedergegebene Pfeil zeigt eine beispielhafte Flussrichtung des Kühlmittels an. Das Kühlmittel strömt aus der Kühlmittelleitung durch die Kühlmittelleitungsöffnung 14 in den Innenraum 12 und von dort durch die Hohlleiteröffnungen 13 in die elektrischen Hohlleiter 1. Somit handelt es sich um ein T-Stück in einem Zulauf des Kühlkreislaufes vor einer Spule. Die Flussrichtung könnte auch umgekehrt sein. Dann befände sich das T-Stück in einem Ablauf des Kühlkreislaufes nach einer Spule.

Die **Fig. 8** zeigt eine schematische Schnittansicht eines Verbindungsstückes 10 gemäß einer vierten Ausführungsform. Das Verbindungsstück 10 ist ein T-Stück, wobei das Kontaktelement 15 durch das metallische Gehäuse 11 gebildet ist und das Trennelement 16 als eine das Gehäuse 11 durchsetzende elektrisch isolierende Hülse, insbesondere Keramikhülse, ausgebildet ist. Die Kühlmittelleitungsöffnung 14 ist durch ein hohles Inneres der Keramikhülse bereitgestellt. Die beiden Hohlleiteröffnungen 13 sind durch das metallische Gehäuse 11 miteinander elektrisch leitend verbunden. Der in dem Innenraum 12 wiedergegebene Pfeil zeigt eine beispielhafte Flussrichtung des Kühlmittels an. Das Kühlmittel strömt aus der Kühlmittelleitung durch die Kühlmittelleitungsöffnung 14 in den Innenraum 12 und von dort durch die Hohlleiteröffnungen 13 in die elektrischen Hohlleiter 1. Somit handelt es sich um ein T-Stück in einem Zulauf des Kühlkreislaufes vor einer Spule. Die Flussrichtung könnte auch umgekehrt sein. Dann befände sich das T-Stück in einem Ablauf des Kühlkreislaufes nach einer Spule.

Die **Fig. 9** zeigt eine schematische Schnittansicht eines Verbindungsstückes 10 gemäß einer fünften Ausführungsform. Das Verbindungsstück 10 ist ein Sammelglied zum Zusammenführen oder Vereinzeln von drei elektrischen Hohlleitern 1 (siehe auch **Fig. 10**). Das Gehäuse 11 ist zweiteilig ausgebildet und umfasst einen männlichen Teil 17, der aus einem elektrisch leitenden Material besteht und das Kontaktelement 15 zwischen den Hohlleiteröffnungen 13 bildet, und einen weiblichen Teil 18, der aus einem elektrisch isolierenden Material besteht und das Trennelement 16 bildet, in dem die Kühlmittelleitungsöffnung 14 geformt aus. Der männliche Teil 17 und der weibliche Teil 18 sind verbindbar ausgebildet, wobei ein Dichtungsring dafür sorgt, dass der durch den männlichen Teil 17 und den weiblichen Teil 18 gebildete Innenraum 12 fluiddicht ist. Optional weist das Verbindungsstück 10 einen Schraubverschluss oder Bajonettverschluss auf. In einer alternativen Ausgestaltung ist das Kontaktelement 15 weiblich und das Trennelement 16 männlich ausgebildet, wodurch alle Hohlleiteröffnungen 13 und die Kühlmittelleitungsöffnung 14 voneinander elektrisch isoliert sind. Wenn das Kontaktelement 15 weiblich und metallisch ist, kann dessen Rand dicht auf das männliche Trennelement 16 aufgerollt beziehungsweise gebördelt werden. In einer noch anderen Ausgestaltung bestehen der männliche Teil 17 und der weibliche Teil 18 aus einem elektrisch isolierenden Material, beispielsweise aus Keramik. Auch hier sind alle Hohlleiteröffnungen 13 und die Kühlmittelleitungsöffnung 14 voneinander elektrisch isoliert.

Die **Fig. 10** zeigt eine schematische perspektivische Ansicht des Verbindungsstückes 10 gemäß der fünften Ausführungsform. Der männliche Teil 17 und der weibliche Teil 18 des Verbindungsstückes 10 sind zusammengesetzt, um ein fluiddichtes Gehäuse 11 zu bilden. Gut zu erkennen sind die drei Hohlleiteröffnungen 13 in dem männlichen Teil 17, die Kühlmittellleitungsöffnung 14 in dem weiblichen Teil 18 ist angedeutet.

Die **Fig. 11** zeigt eine schematische Schnittansicht eines Verbindungsstückes 10 gemäß einer sechsten Ausführungsform. Das Verbindungsstück 10 ist ein Y-Stück. Das Gehäuse 11 ist rund ausgebildet und besteht aus einem elektrisch isolierenden Material. Insbesondere kann das Gehäuse 11 in einer Längserstreckung zylindrisch, sphärisch oder toroidal geformt sein. Das Y-Stück umfasst drei Hohlleiteröffnungen 13 und eine zentral angeordnete Kühlmittelleitungsöffnung 14. Das Gehäuse 11 bildet das Trennelement 16. Das Kontaktelement 15 umfasst drei Kontaktbleche zum Kontaktieren von Hohlleitern 1 und in **Fig. 11** nicht dargestellte Verbindungsleitungen zum Verbinden der Kontaktbleche. Optional sind die Kontaktbleche nicht elektrisch leitend verbunden. Bei den Hohlleiteröffnungen 13 ist das Gehäuse 11 verdickt ausgebildet, um ausreichend Kontaktfläche zum Befestigen der elektrischen Hohlleiter 1 bereitzustellen. Zusätzlich reichen die elektrischen Hohlleiter 1 weit in den Innenraum 12 und sind entlang des Gehäuses 11 verlaufend gebogen. Das Y-Stück ist bevorzugt in einem Ablauf des Kühlkreislaufes nach einer Spule angeordnet, wobei das Kühlmittel aus den elektrischen Hohlleitern 1 in den Innenraum 12 strömt. Auf Grund der gebogenen Anordnung der elektrischen Hohlleiter 1 stellt sich eine wirbelartige Strömung in dem Innenraum 12 ein, die ein besonders effizientes Abführen des Kühlmittels in die Kühlmittelleitung ermöglicht. Die weit in den Innenraum 12 reichenden elektrischen Hohlleiter 1 können zumindest teilweise mit Kunststoff vergossen sein, wobei die freien Enden der elektrischen Hohlleiter 1 bevorzugt aufgebogen sind, um mit dem Innenraum 12 hydraulisch oder pneumatisch verbunden zu sein.

Neben der in **Fig. 11** dargestellten Ausführungsform eines Verbindungsstückes 10 können auch alle anderen Verbindungsstücke 10 einen Innenraum 12 umfassen, der abgerundet oder rund und damit ecken- und kantenfrei ist. Eine abgerundete Form ist druckresistenter als eckige oder kantige Formen, da bei Ersterer eine auftretende Kerbspannung auf Grund des hohen Druckes im Innenraum 12 verringert ist.

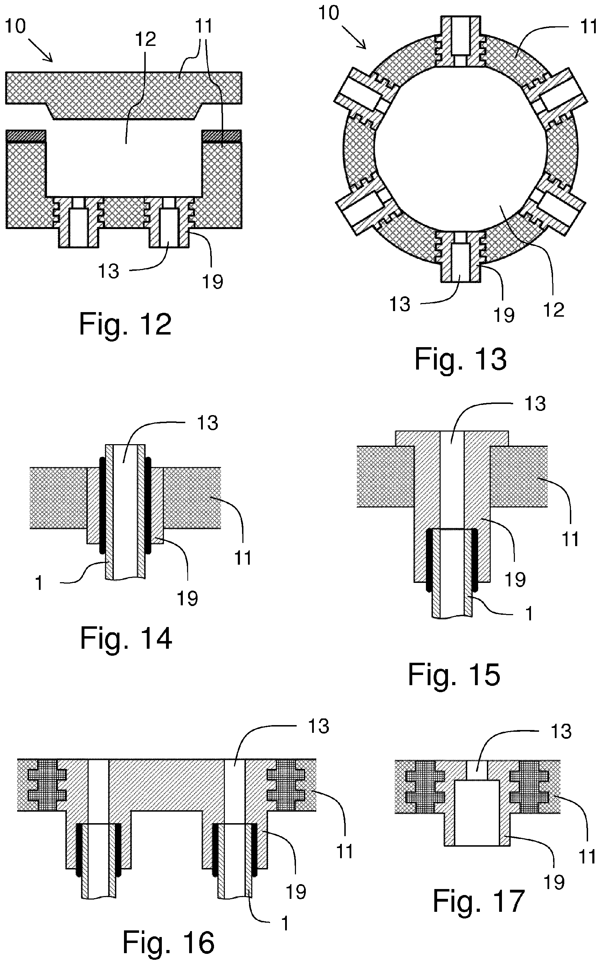

Die **Fig. 12** zeigt eine schematische Schnittansicht eines Verbindungsstückes 10 gemäß einer siebten Ausführungsform. Das Verbindungsstück 10 ist zweiteilig ausgeführt, wobei ein Deckel des Verbindungsstückes 10 einen abgeschrägten Ansatz an seiner Innenseite aufweist, der zur Zentrierung des Deckels bei einem Zusammenführen des Gehäuses 11 dient. Die Kühlmittelleitungsöffnung 14 ist nicht abgebildet. Jede der Hohlleiteröffnungen 13 ist durch ein hohles Inneres eines Gehäuseeinsatzes 19 bereitgestellt. Der Gehäuseeinsatz 19 dient als Tiefenanschlag für den nicht abgebildeten elektrischen Hohlleiter 1 und kann, wenn er aus einem elektrisch isolierenden Material besteht, das Trennelement 16 sein. In der Regel ist der Gehäuseeinsatz 19 elektrisch leitend und das Gehäuse 11 elektrisch isolierend aufgebaut, sodass das Gehäuse 11 das Trennelement 16 bildet. Die beiden Hohlleiteröffnungen 13 sind also voneinander elektrisch isoliert. Eine elektrisch leitende Verbindung zwischen den beiden Hohlleiteröffnungen 13 ist beispielsweise mittels eines doppelten Gehäuseeinsatzes 19 möglich, wie er in **Fig. 16** dargestellt ist.

Die **Fig. 13** zeigt eine schematische Schnittansicht eines Verbindungsstückes 10 gemäß einer achten Ausführungsform. Das Verbindungsstück 10 weist einen kreisrunden Querschnitt auf, wobei entlang einer Umfangslinie des Querschnittes sechs Hohlleiteröffnungen 13 äquidistant angeordnet sind. Jede der Hohlleiteröffnungen 13 ist durch ein hohles Inneres eines Gehäuseeinsatzes 19 bereitgestellt, wobei der Gehäuseeinsatz 19 einen Tiefenanschlag aufweist und aus einem elektrisch isolierenden Material bestehen kann. In der Regel ist der Gehäuseeinsatz 19 elektrisch leitend und das Gehäuse 11 elektrisch isolierend aufgebaut, sodass das Gehäuse 11 das Trennelement 16 bildet. Die sechs Hohlleiteröffnungen 13 sind also voneinander elektrisch isoliert. Eine elektrisch leitende Verbindung zwischen zwei Hohlleiteröffnungen 13 ist beispielsweise mittels eines doppelten Gehäuseeinsatzes 19 möglich, wie er in **Fig. 16** dargestellt ist.

Die **Fig. 14** zeigt eine schematische Schnittansicht eines Gehäuseeinsatzes 19 eines Verbindungsstückes 10. Zwischen dem elektrisch isolierenden Gehäuse 11 und dem elektrischen Hohlleiter 1 in der Hohlleiteröffnung 13 ist der Gehäuseeinsatz 19 in Form einer Hülse angeordnet. Die Hülse ist in das Gehäuse 11 eingepresst oder anderweitig mit dem Gehäuse 11 verbunden und weist keinen Tiefenanschlag für den elektrischen Hohlleiter 1 auf, sodass dieser tief in das Gehäuse 11 verlegt werden kann. Der elektrische Hohlleiter 1 ist mit der Hülse verlötet (siehe dunkle Bereiche). Die Lötstelle ist eine elektrisch leitende Verbindung.

Die **Fig. 15** zeigt eine schematische Schnittansicht eines Gehäuseeinsatzes 19 eines Verbindungsstückes 10. Die Hohlleiteröffnung 13 des Verbindungsstückes 10 ist durch ein hohles Inneres des Gehäuseeinsatzes 19 gebildet, der das elektrisch isolierende Gehäuse 11 durchsetzt. Der elektrische Hohlleiter 1 ist mit dem Gehäuseeinsatz 19 verlötet, wie durch die dunkel dargestellte Lötstelle angedeutet ist. Die Lötstelle ist eine elektrisch leitende Verbindung. Der Gehäuseeinsatz 19 ragt deutlich über das Gehäuse 11 hinaus, damit die Lötstelle ausreichend weit von dem Gehäuse 11 entfernt ist, um qualitativ schlechte Lötstellen durch unerwünschte Wärmeableitung in das Gehäuse 11 zu vermeiden. Zudem weist der Gehäuseeinsatz 19 einen Tiefenanschlag auf, der eine optimale Positionierung des elektrischen Hohlleiters 1 zum qualitativ guten Löten ermöglicht.

Die **Fig. 16** zeigt eine schematische Schnittansicht eines Gehäuseeinsatzes 13 eines Verbindungsstückes 10. Der Gehäuseeinsatz 19 stellt zwei Hohlleiteröffnungen 13 bereit und besteht aus einem elektrisch leitenden Material, sodass der Gehäuseeinsatz 19 als Kontaktelement 15 zwischen den zwei elektrischen Hohlleitern 1 wirkt. Diese Art von Gehäuseeinsatz 19 ist für Anwendungen mit großen elektrischen Strömen besonders geeignet. Der Gehäuseeinsatz 19 ist mittels Vulkanisierens mit dem elektrisch isolierenden Gehäuse 11 verbunden, das das Trennelement 16 bildet. Die elektrischen Hohlleiter 1 stecken bis zu einer Durchmesserverengung in dem Gehäuseeinsatz 19 und sind mit dem Gehäuseeinsatz 19 verschweißt (siehe dunkle Bereiche), könnten aber auch verlötet sein. Die Durchmesserverengung dient als Tiefenanschlag.

Die **Fig. 17** zeigt eine schematische Schnittansicht eines Gehäuseeinsatzes 19 eines Verbindungsstückes 10. Der Gehäuseeinsatz 19, der einen Tiefenanschlag bereitstellt, ist in das elektrisch isolierende Gehäuse 11 einvulkanisiert, das das Trennelement 16 bildet.

Unabhängig von der speziellen Ausgestaltung kann der Gehäuseeinsatz 19 mit dem Gehäuse 11 mittels folgender Verbindungstechniken verbunden sein: Weichlöten, Hartlöten, Ultraschallschweißen, Einpressen, Einschrauben in Innengewinde, Einschrauben mit Pressring, Verschrauben mit Mutter, Nieten, Kleben, Eingießen, Einschmelzen mit Glas, Sintern oder Vulkanisieren. Eine Schraubverbindung ist zerstörungsfrei lösbar und ermöglicht einen Austausch der elektrischen Hohlleiter 1. Weiterhin kann eine Schraubverbindung mit einer Klebeverbindung oder einer Lackverbindung kombiniert werden, um die Verbindung langanhaltend vibrationsresistent und fluiddicht zu machen. Optional können Dichtungsscheiben verwendet werden.

Ebenfalls unabhängig von der speziellen Ausgestaltung kann der Gehäuseeinsatz 19 aus den folgenden Materialen bestehen: Messing, Eisen, Kupfer, Silber, Gold, Aluminium oder einer Legierung eines der genannten Materialien.

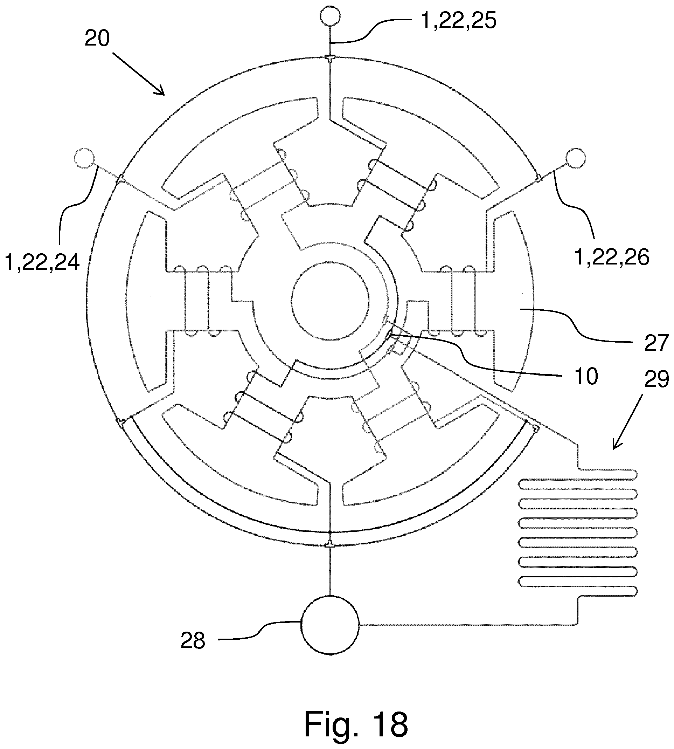

Die **Fig. 18** zeigt eine schematische Ansicht einer elektromagnetischen Maschine 20 gemäß einer ersten Ausführungsform der vorliegenden Erfindung. Die elektromagnetische Maschine 20 umfasst eine Magneteinheit 21 und eine mit der Magneteinheit 21 in elektromagnetischer Wechselwirkung stehende Leitereinheit 22, wobei die Leitereinheit 22 drei elektrische Leiter, nämlich eine erste Phase 24, eine zweite Phase 25 und eine dritte Phase 26, aufweist. Die drei Phasen 24, 25 und 26 sind zu einer Stern- beziehungsweise Dreieckschaltung geschaltet. Aus Gründen der Übersichtlichkeit ist die Magneteinheit 21 in **Fig. 18** nicht dargestellt. Jede der Phasen 24, 25 und 26 ist ein erfindungsgemäßer elektrischer Hohlleiter 1. Bei dieser elektromagnetischen Maschine 20 handelt es sich um eine Drehstrom-Synchronmaschine mit drei Phasen, wobei die Phasen 24, 25 und 26 die Leitereinheit 22 bilden. Die Phasen 24, 25 und 26 sind auf sechs Ankerköpfe 27 eines Rotors der elektromagnetischen Maschine 20 verteilt gewickelt. Weiterhin umfasst die elektromagnetische Maschine 20 eine Kühleinheit, wobei die Kühleinheit eine Pumpe 28 und die elektrischen Hohlleiter 1 umfasst. Die Pumpe 28 pumpt ein Kühlmittel durch die elektrischen Hohlleiter 1. Zusätzlich ist ein Wärmetauscher 29 vorgesehen, um das nach einem Durchlauf erwärmte Kühlmittel vor einer erneuten Einspeisung in die elektrischen Hohlleiter 1 abzukühlen und somit die Wärme an die Umgebung oder eine weiterführende Kühlvorrichtung abzugeben. Die Pumpe 28 und der Wärmetauscher 29 sind mittels erfindungsgemäßer Verbindungsstücke 10 mit den elektrischen Hohlleitern 1 verbunden. Neben Synchronmaschinen sind auch Asynchronmaschinen von der Erfindung umfasst, wobei jeder der Maschinentypen von einem oder mehreren Permanentmagneten oder Elektromagneten erregt sein kann.

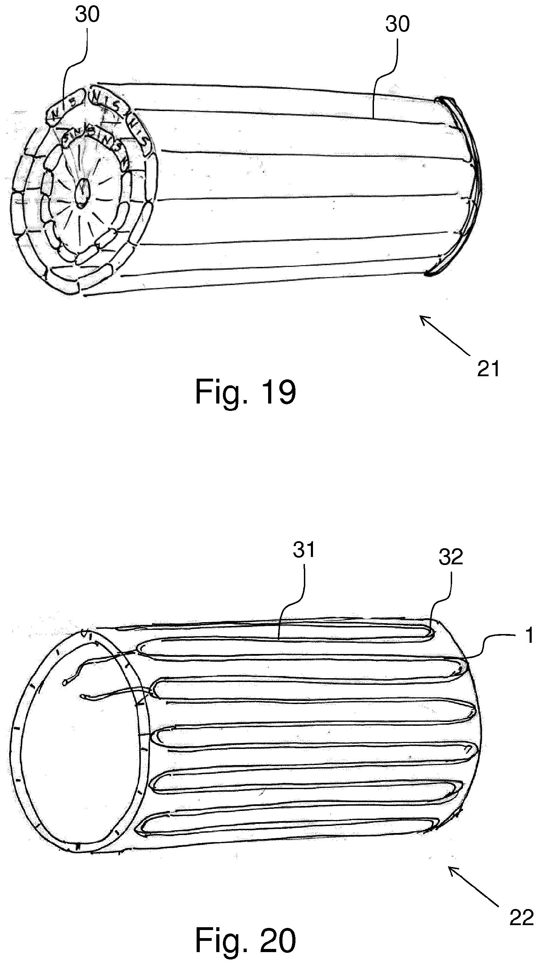

Die **Fig. 19** zeigt eine schematische perspektivische Ansicht einer Magneteinheit 21 einer elektromagnetischen Maschine 20 gemäß einer zweiten Ausführungsform der vorliegenden Erfindung. Die Magneteinheit 21 ist als ein äußerer Hohlzylinder und ein in dem äußeren Hohlzylinder angeordneter innerer Hohlzylinder ausgebildet. Zwischen dem äußeren Hohlzylinder und dem inneren Hohlzylinder ist ein Spalt zum Aufnehmen der Leitereinheit 22 angeordnet. Die neutralen Zonen 30 sind zu einer Rotationsachse parallel angeordnet. Die Magneteinheit 22 gemäß **Fig. 19** ist als Doppelrotor ausgebildet und weist zwölf Magnete pro Hohlzylinder auf.

Die **Fig. 20** zeigt eine schematische perspektivische Ansicht einer Leitereinheit 22 der elektromagnetischen Maschine 20 gemäß der zweiten Ausführungsform der vorliegenden Erfindung. Die Leitereinheit 22 ist als ein Hohlzylinder ausgebildet. Der Hohlzylinder dient als Träger für den elektrischen Hohlleiter 1. Induktionsaktive Segmente 31 sind zu der Rotationsachse parallel angeordnet, induktionspassiven Segmente 32 tangential. Das Längenverhältnis der induktionsaktiven Segmente 31 zu den induktionspassiven Segmenten 32 ist 8:1.

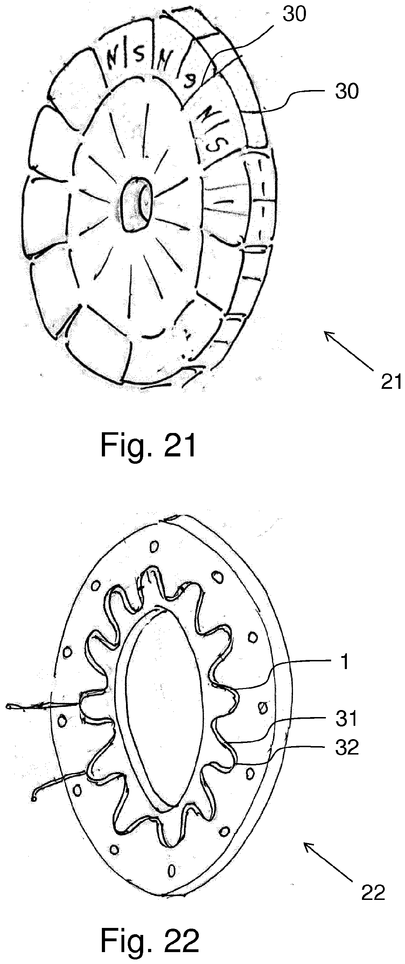

Die **Fig. 21** zeigt eine schematische perspektivische Ansicht eines Teils einer Magneteinheit 21 einer elektromagnetischen Maschine 20 gemäß einer dritten Ausführungsform der vorliegenden Erfindung. Die dritte Ausführungsform ist eine zu der Rotationsachse transversale Anordnung. Die Magneteinheit 21 ist als eine erste Scheibe und eine neben der ersten Scheibe angeordnete zweite Scheibe ausgebildet, wobei die zweite Scheibe in **Fig. 21** nicht dargestellt ist. Die Scheiben sind identisch aufgebaut, aber mit zueinander entgegengesetzten Oberseiten auf der Rotationsachse angeordnet, sodass sich gegenüber einem Nordpol N der ersten Scheibe ein Südpol S der zweiten Scheibe befindet und vice versa. Zwischen der ersten Scheibe und der zweiten Scheibe ist ein Spalt zum Aufnehmen der Leitereinheit 22 angeordnet. Die neutralen Zonen 30 sind zu der Rotationsachse radial angeordnet. Die Magneteinheit 21 gemäß **Fig. 21** ist als Doppelrotor ausgebildet und weist zwölf Magnete pro Scheibe auf.

Die **Fig. 22** zeigt eine schematische perspektivische Ansicht einer Leitereinheit 22 der elektromagnetischen Maschine 20 gemäß der dritten Ausführungsform der vorliegenden Erfindung. Die Leitereinheit 22 als eine Scheibe ausgebildet. Die Scheibe dient als Träger für den elektrischen Hohlleiter 1. Die induktionsaktiven Segmente 31 sind zu der Rotationsachse radial angeordnet, die induktionspassiven Segmente 32 tangential. Das Längenverhältnis der induktionsaktiven Segmente 31 zu den induktionspassiven Segmenten 32 ist 3:1.

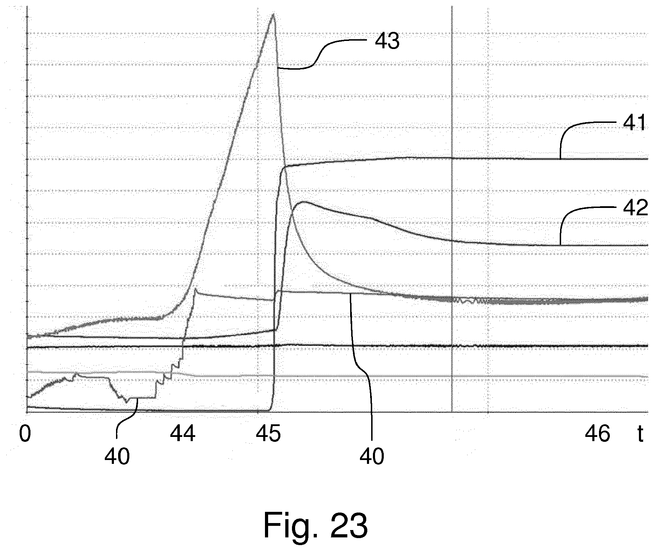

Die **Fig. 23** zeigt ein Diagramm, das zeitaufgelöst gemessene wesentliche Parameter für einen Betrieb einer elektromagnetischen Maschine 20 gemäß der vorliegenden Erfindung darstellt. Die folgenden Parameter sind über einer horizontalen Zeitachse aufgetragen: Stromdichte 40 in dem elektrischen Hohlleiter 1 der elektromagnetischen Maschine 20; Druck 41 einer Pumpe 28 zum Pumpen eines Kühlmittels durch den elektromagnetischen Hohlleiter 1; Kühlmitteltemperatur 42 an einem Auslauf nach Durchströmen des elektrischen Hohlleiters 1; und Leitertemperatur 43 an einer Oberfläche des elektrischen Hohlleiters 1. Zu einem ersten Zeitpunkt 44 wird die elektromagnetischen Maschine 20 gestartet und die Pumpe 28 bleibt noch ausgeschaltet. Zwischen dem ersten Zeitpunkt 44 und einem zweiten Zeitpunkt 45 steigt die Leitertemperatur 43 stark an, denn der fließende Strom erwärmt den elektrischen Hohlleiter 1, der nicht aktiv gekühlt wird, sodass die Wärmeabfuhr unzureichend ist. Zu dem zweiten Zeitpunkt 45 wird die elektromagnetische Maschine 20 weiter betrieben und die Pumpe 28 wird eingeschaltet. Dies führt zu einem sprunghaften Anstieg des Druckes 41. Zwischen dem zweiten Zeitpunkt 45 und einem dritten Zeitpunkt 46 steigt die Kühlmitteltemperatur 42 an. Im Gegenzug sinkt die Leitertemperatur 43 rapide ab, denn die Wärmeabfuhr erfolgt nun aktiv und ausreichend mittels des Kühlmittels. Ab dem dritten Zeitpunkt 46 ist ein Gleichgewichtszustand für den Betrieb der elektromagnetischen Maschine 20 erreicht, der für einen Dauerbetrieb geeignet ist. In dem Gleichgewichtszustand sind die kritischen Parameter wie folgt: Stromdichte 40 ist 36 A/mm²; Kühlmitteltemperatur 42 ist 53°C; und Leitertemperatur 43 ist 36°C.

### BEZUGSZEICHENLISTE

- 1: Elektrischer Hohlleiter
- 2: Körper
- 3: Innenraum
- 4: Schicht
- 10: Verbindungsstück
- 11: Gehäuse
- 12: Innenraum
- 13: Hohlleiteröffnung
- 14: Kühlmittelleitungsöffnung
- 15: Kontaktelement
- 16: Trennelement
- 17: Männlicher Teil
- 18: Weiblicher Teil
- 19: Gehäuseeinsatz
- 20: Elektromagnetische Maschine
- 21: Magneteinheit
- 22: Leitereinheit
- 24: Erste Phase
- 25: Zweite Phase
- 26: Dritte Phase
- 27: Ankerkopf
- 28: Pumpe
- 29: Wärmetauscher
- 30: Neutrale Zone
- 31: Induktionsaktives Segment
- 32: Induktionspassives Segment
- 40: Stromdichte
- 41: Druck
- 42: Kühlmitteltemperatur
- 43: Leitertemperatur
- 44: Erster Zeitpunkt
- 45: Zweiter Zeitpunkt
- 46: Dritter Zeitpunkt
- N: Nordpol
- S: Südpol

## Patentansprüche

1. Elektrische Maschine mit einer Wicklung, die einen elektrischen Hohlleiter (1) in Gestalt eines rohrförmigen, einen hohlen Innenraum (3) aufweisenden Körpers (2) aufweist, wobei der Körper (2) ein elektrisch leitfähiges Material umfasst, einen Außendurchmesser und einen Innendurchmesser aufweist und an einer äußeren Mantelfläche des Körpers (2) mit einer elektrisch isolierenden Schicht (4) beschichtet ist, wobei ein Verhältnis von Außendurchmesser zu Innendurchmesser in einem Bereich von 1,25:1 bis 4:1 ist, **dadurch gekennzeichnet, dass** der Körper (2) aus einem Stück hergestellt ist und der Außendurchmesser des Körpers (2) in einem Bereich von 1,0 mm bis 3,2 mm liegt.

2. Elektrische Maschine nach Anspruch 1, **dadurch gekennzeichnet, dass** das Material Kupfer, Aluminium oder eine Legierung eines der genannten Materialien ist.

3. Elektrische Maschine nach Anspruch 1 oder 2, **dadurch gekennzeichnet, dass** eine Zugfestigkeit des elektrischen Hohlleiters (1) in einem Bereich von 75 N/mm² bis 225 N/mm² ist.

## Claims

1. Electrical machine with a winding having an electrical hollow conductor (1) in the form of a tubular body (2) having a hollow interior (3), wherein the body (2) comprises an electrically conductive material and an outer diameter and an inner diameter, and is coated on an outer lateral surface thereof with an electrically insulating layer (4), the ratio of the outer diameter to the inner diameter being in a range from 1.25:1 to 4:1, **characterized in that** the body (2) is made in one piece and the outer diameter of the body (2) is in the range of 1.0 mm to 3.2 mm.

2. Electrical machine according to claim 1, **characterized in that** the material is copper, aluminum or an alloy of one of the materials mentioned.

3. Electrical machine according to claim 1 or 2, **characterized in that** a tensile strength of the electrical hollow conductor (1) is in a range of 75 N/mm² to 225 N/mm².

## Revendications

1. Machine électrique avec un enroulement, qui présente un conducteur creux électrique (1) sous la forme d'un corps tubulaire (2) présentant un espace intérieur creux (3), le corps (2) comprenant un matériau électriquement conducteur, présentant un diamètre extérieur et un diamètre intérieur et étant revêtu d'une couche électriquement isolante (4) sur une surface d'enveloppe extérieure du corps (2), un rapport entre le diamètre extérieur et le diamètre intérieur étant dans une plage de 1,25:1 à 4:1, **caractérisé en ce que** le corps (2) est fabriqué d'une seule pièce et le diamètre extérieur du corps (2) se situe dans une plage de 1,0 mm à 3,2 mm.

2. Machine électrique selon la revendication 1, **caractérisée en ce que** le matériau est le cuivre, l'aluminium ou un alliage de l'un desdits matériaux.

3. Machine électrique selon la revendication 1 ou 2, **caractérisée en ce qu'**une résistance à la traction du conducteur creux électrique (1) se situe dans une plage de 75 N/mm² à 225 N/mm².
